# EUROPÄISCHE PATENTSCHRIFT

(11) **EP 3 600 994 B1**
(45) Veröffentlichungstag und Bekanntmachung des Hinweises auf die Patenterteilung: **30.06.2021**
(21) Anmeldenummer: 18715519.7
(22) Anmeldetag: 20.03.2018
(51) Int. Cl.: B60T 13/66

(54) **ELEKTRONISCH STEUERBARES BREMSSYSTEM SOWIE VERFAHREN ZUM STEUERN DES ELEKTRONISCH STEUERBAREN BREMSSYSTEMS MIT REIN ELEKTRISCHEM BREMSWERTGEBER**
ELECTRIC CONTROLLABLE BRAKE SYSTEM AND METHOD FOR CONTROLLING THE SYSTEM BY MEANS OF FULLY ELECTRIC ENCODER
SYSTÈME DE FREINAGE À CONTRÔLE ÉLECTRIQUE ET MÉTHODE DE CONTRÔLE PAR MOYEN D'ÉMETTEUR DE VALEUR ÉLECTRIQUE

(30) Priorität: 21.03.2017 DE 102017002721
(43) Veröffentlichungstag der Anmeldung: 05.02.2020
(73) Patentinhaber: ZF CV Systems Hannover GmbH, 30453 Hannover (DE)
(72) Erfinder: VAN THIEL, Julian, 30938 Grossburgwedel (DE)
(74) Vertreter: Schiller, Harald
(86) Internationale Anmeldenummer: PCT/EP2018/056950
(87) Internationale Veröffentlichungsnummer: WO 2018/172319

(56) Entgegenhaltungen:
- EP-A1- 1 561 661
- DE-B3-102005 062 907
- DE-B3-102008 009 043
- FR-A1- 2 369 954

## Beschreibung

Die Erfindung betrifft ein elektronisch steuerbares Bremssystem sowie ein Verfahren zum Steuern des elektronisch steuerbaren Bremssystems. Ein solches elektronisch steuerbares Bremssystem weist mindestens auf: ein Betriebsbrems-Steuermodul zum Steuern mindestens eines ersten und eines zweiten Betriebsbremskreises, den ersten Betriebsbremskreis mit ersten Betriebsbremsen, wobei den ersten Betriebsbremsen ein erster Betriebsbrems-Bremsdruck zuführbar ist und das Betriebsbrems-Steuermodul ausgebildet ist, in Abhängigkeit einer Bremsvorgabe ein erstes Betriebsbrems-Steuersignal zu erzeugen, wobei der erste Betriebsbrems-Bremsdruck in Abhängigkeit des ersten Betriebsbrems-Steuersignals erzeugt und an die ersten Betriebsbremsen vorgegeben werden kann zum von dem Betriebsbrems-Steuermodul elektrisch gesteuerten Umsetzen der Bremsvorgabe über den mindestens einen ersten Betriebsbremskreis, den zweiten Betriebsbremskreis mit zweiten Betriebsbremsen, wobei den zweiten Betriebsbremsen ein zweiter Betriebsbrems-Bremsdruck zuführbar ist und das Betriebsbrems-Steuermodul ausgebildet ist, in Abhängigkeit der Bremsvorgabe ein zweites Betriebsbrems-Steuersignal zu erzeugen, wobei der zweite Betriebsbrems-Bremsdruck in Abhängigkeit des zweiten Betriebsbrems-Steuersignals erzeugt und an die zweiten Betriebsbremsen vorgegeben werden kann zum von dem Betriebsbrems-Steuermodul elektrisch gesteuerten Umsetzen der Bremsvorgabe über den mindestens einen zweiten Betriebsbremskreis; einen Parkbremskreis mit Feststellbremsen, wobei die Feststellbremsen zum Parkbremsen und/oder Hilfsbremsen des Fahrzeugs zuspannbar sind; und ein Anhängersteuermodul mit einem Anhängerbremsdruckanschluss zur Verbindung mit einem Anhängerbremsdruck-Kupplungskopf wobei das Anhängersteuermodul ausgebildet ist, einen Anhängerbremsdruck zu erzeugen und über den Anhängerbremsdruckanschluss auszugeben.

Ein Bremssystem in einem Fahrzeug, vorzugsweise Nutzfahrzeug, kann mit zwei oder mehreren Betriebsbremskreisen, in denen ein an Betriebsbremsen ausgesteuerter Betriebsbrems-Bremsdruck eingestellt wird, sowie ein Parkbremskreis, in dem ein an Federspeicherbremsen ausgesteuerter Parkbrems-Bremsdruck eingestellt wird, vorgesehen sein. Die Aussteuerung des Betriebsbrems-Bremsdruckes an die Betriebsbremsen erfolgt beispielsweise über einen Druckmodulator, der gemäß einer Betriebsbrems-Bremsvorgabe in Form eines pneumatischen Betriebsbrems-Steuerdruckes oder eines elektrischen Betriebsbrems-Steuersignals einen Betriebsbrems-Bremsdruck an die jeweiligen Betriebsbremsen ausgibt.

Im normalen Betrieb erfolgt die Vorgabe an den Druckmodulator elektrisch über das Betriebsbrems-Steuersignal, wobei das Betriebsbrems-Steuersignal von einem Betriebsbrems-Steuermodul in Abhängigkeit einer manuell vorgegebenen Betriebsbrems-Bremsvorgabe und/oder in Abhängigkeit einer von einem Assistenzsystem automatisiert angeforderten Assistenz-Bremsvorgabe ermittelt und ausgegeben wird. Im Redundanzfall, z. B. bei einem elektrischen Ausfall des Betriebsbrems-Steuermoduls, erfolgt die Vorgabe an den Druckmodulator über den Betriebsbrems-Steuerdruck, der dem Druckmodulator über einen pneumatischen Redundanzanschluss vorgegeben wird und der beispielsweise von einer als elektropneumatisches Betriebsbremsventil ausgeführten Betriebsbrems-Betätigungsvorrichtung mit einem Bremspedal in Abhängigkeit der Betriebsbrems-Bremsvorgabe ausgegeben wird.

Der Parkbremskreis dient vorrangig dazu, das Fahrzeug in einer Parksituation abzustellen oder eine Hilfsbremsung oder Notbremsung während der Fahrt durchzuführen, indem gesteuert von einem Parkbrems-Steuermodul ein Parkbrems-Bremsdruck ausgesteuert wird, in Abhängigkeit dessen die Federspeicherbremsen zugespannt werden, wobei zum Zuspannen der Parkbrems-Bremsdruck reduziert wird. Beispielhaft ist ein derartiges Parkbrems-Steuermodul bzw. Feststellbremsmodul in DE 10 2015 008 377 A1 beschrieben. Herkömmlicherweise arbeiten der Parkbremskreis und die Betriebsbremskreise getrennt voneinander. In bestimmten Anwendungen ist es möglich, den oben geschilderten Redundanzmechanismus der Betriebsbremse durch die alternative Ansteuerung des Feststellbremskreises zu ersetzen. Dazu muss die elektrische Spannungsversorgung der Parkbremse üblicherweise unabhängig von der Spannungsversorgung der Betriebsbremse erfolgen.

Bei einem Ausfall der elektrischen Ansteuerung der Betriebsbremskreise über das Betriebsbrems-Steuermodul kann wie beschrieben eine pneumatische durch den Fahrer gesteuerte erste Rückfallebene ausgebildet werden. Steht der Fahrer allerdings nicht als Rückfallebene zur Verfügung, da er z. B. unaufmerksam oder im Falle von höher automatisierten Fahrmanövern nicht am Platz ist, kann eine zweite Rückfallebene ausgebildet werden, die automatisiert und elektronisch gesteuert eingreifen kann, wobei dazu der vorhandene Parkbremskreis verwendet wird. Die automatisierte Bremsanforderung wird nach Erkennen des elektrischen Ausfalls in einem der Betriebsbremskreise dem Parkbrems-Steuermodul zugeführt, das durch eine Vorgabe des Parkbrems-Bremsdruckes entsprechend die Federspeicherbremsen betätigen kann, um den elektrischen Ausfall der Betriebsbremsen zu kompensieren. Alternativ kann die automatisierte Bremsanforderung dem Parkbrems-Steuermodul permanent zugeführt werden und bei Erkennen eines Ausfalls in mindestens einem der Betriebsbremskreise durch das Parkbrems-Steuermodul, dieses durch eine Vorgabe des Parkbrems-Bremsdruckes entsprechend die Federspeicherbremsen betätigen. In dem Fall ist jedoch unter Umständen lediglich eine Fahrzeugachse, an der die Federspeicherbremsen im Parkbremskreis angeordnet sind, abgebremst. Dies kann zu einer eingeschränkten Verzögerungsleistung und ggf. zusätzlichen Instabilitäten während der Fahrt führen.

Um dies zu vermeiden, ist in EP 2 090 481 B1 ein elektronisch steuerbares Bremssystem beschrieben, in dem ein Hinterachs-Betriebsbremskreis von einem Hinterachs-Betriebsbrems-Steuermodul gesteuert wird und ein Vorderachs-Betriebsbremskreis von einem Vorderachs-Betriebsbrems-Steuermodul.

Im Vorderachs-Betriebsbrems-Steuermodul ist das Parkbrems-Steuermodul für den Parkbremskreis integriert, wobei der Parkbremskreis Federspeicherbremsen an der Hinterachse steuert. Das Hinterachs-Betriebsbrems-Steuermodul sowie die Komponenten des Hinterachs-Betriebsbremskreises werden von einer ersten Energiequelle und das Vorderachs-Betriebsbrems-Steuermodul sowie das Parkbrems-Steuermodul mit den entsprechend zugeordneten Komponenten werden von einer zweiten Energiequelle mit Energie versorgt.

Bei einem Ausfall der ersten Energiequelle, d. h. dem Hinterachs-Betriebsbremskreis mit den Betriebsbremsen an der Hinterachse, kann die Vorderachse weiter über den Vorderachs-Betriebsbremskreis und die Hinterachse über den Parkbremskreis gebremst werden, so dass weiterhin beide Fahrzeugachsen abgebremst werden können. Der Parkbremskreis kompensiert somit den Ausfall des Hinterachs-Betriebsbremskreises, indem an der Hinterachse statt mit den Betriebsbremsen mit den Federspeicherbremsen gebremst wird. Bei einem Ausfall der zweiten Energiequelle, d. h. sowohl des Parkbremskreises an der Hinterachse als auch des Vorderachs-Betriebsbremskreises, wird von dem Hinterachs-Betriebsbrems-Steuermodul ein Betriebsbrems-Steuersignal ausgegeben, das - wie im normalen Betrieb - an den Hinterachs-Druckmodulator aber zusätzlich auch an ein Anhängersteuerventil des Fahrzeuges übertragen wird. Von dem Anhängersteuerventil wird ein entsprechender Steuerdruck erzeugt, der - falls vorhanden - auf den Anhänger übertragen wird, um dort eine Bremsung zu bewirken, und gleichzeitig auch über eine Redundanz-Druckleitung zum pneumatischen Redundanzanschluss am Vorderachs-Druckmodulator. Die Hinterachse und die Vorderachse werden somit - wie im normalen Betrieb - über die Betriebsbremsen abgebremst, wobei die Vorderachse ebenfalls durch das Hinterachs-Betriebsbrems-Steuermodul gesteuert wird.

Das Parkbrems-Steuermodul kann weiterhin einen Parkbrems-Steuerdruck an das Anhängersteuerventil ausgeben, das diesen invertiert und an die Betriebsbremsen des Anhängers weiterleitet, um auch im Anhänger eine Parkbremsfunktion umsetzen zu können.

Somit ist im Stand der Technik vorgeschlagen, jeden Betriebsbremskreis über separate Steuermodule anzusteuern und einen Ausfall einer Energiequelle und somit zumindest eines Betriebsbremskreises dadurch zu kompensieren, dass der oder die jeweils noch funktionierenden Bremskreise eine Bremsung an der ausgefallenen Fahrzeugachse übernehmen, so dass auch im Redundanzfall noch beide Fahrzeugachsen für eine Bremsung herangezogen werden können. Nachteilig hierbei ist, dass in elektronisch gesteuerten Bremssystemen, die über lediglich ein zentrales Betriebsbrems-Steuermodul die Betriebsbremsen an der Hinterachse und der Vorderachse und ggf. weiteren Fahrzeugachsen über den Druckmodulator ansteuern, keine derartige Kompensation stattfinden kann, da bei einem Ausfall der Energiequelle oder einzelner elektrischer Komponenten des jeweiligen Betriebsbremskreises das zentrale Betriebsbrems-Steuermodul nicht mehr die elektrische Ansteuerung der Betriebsbremsen bzw. der vorgeschalteten Druckmodulatoren an einzelnen Fahrzeugachsen übernehmen kann. Somit kann - falls in dem entsprechenden Bremssystem vorhanden - lediglich auf die pneumatische, vom Fahrer gesteuerte erste Rückfallebene ausgewichen werden, falls der Fahrer auch tatsächlich manuell eingreift. Eine rein elektronische Bremsvorgabe wie sie in EP 2 090 481 B1 beschrieben ist bzw. eine mögliche automatisiert vorgegeben Assistenz-Bremsvorgabe kann jedoch nicht mehr umgesetzt werden.

DE 10 2008 009 043 B3 offenbart ein elektronisch geregeltes Bremssystem mit redundanter Steuerung der Bremsaktuatoren, eines für den Anhängerbetrieb vorgesehenen, mindestens einen ersten elektrischen Bremssteuerkreis und einen zweiten elektrischen Bremssteuerkreis umfassenden Zugfahrzeugs. In einem Zugfahrzeug ohnehin vorhandene Komponenten werden dort für eine Druckmittelsteuerung von Bremsaktuatoren, welche von einem gestörten elektrischen Bremskreis nicht mehr angesteuert werden können, eingesetzt.

Es ist daher Aufgabe der Erfindung, ein elektronisch steuerbares Bremssystem sowie ein Verfahren zum Steuern dieses elektronisch steuerbaren Bremssystems anzugeben, das in einfacher und zuverlässiger Weise eine elektrisch redundante Ansteuerung der Betriebsbremsen an beiden Fahrzeugachsen ermöglicht, auch wenn die jeweiligen Betriebsbremskreise von einem gemeinsamen Betriebsbrems-Steuermodul gesteuert werden auch dann wenn die Bremsvorgabe rein elektronisch erfolgt.

Diese Aufgabe wird durch ein elektronisch steuerbares Bremssystem nach Anspruch 1 sowie ein Verfahren nach Anspruch 19 gelöst. Die Unteransprüche geben bevorzugte Weiterbildungen an.

Erfindungsgemäß ist demnach vorgesehen, dass a) bei einer Funktionsstörung des ersten und/oder zweiten Betriebsbremskreis: der erste Betriebsbrems-Bremsdruck in Abhängigkeit des von dem Anhängersteuermodul vorgegebenen Anhängerbremsdrucks an die ersten Betriebsbremsen des mindestens einen ersten Betriebsbremskreises aussteuerbar ist; und der zweite Betriebsbrems-Bremsdruck in Abhängigkeit des von dem Anhängersteuermodul vorgegebenen Anhängerbremsdrucks an die zweiten Betriebsbremsen des mindestens einen zweiten Betriebsbremskreises und/oder der Parkbrems-Bremsdruck direkt oder von dem Anhängersteuermodul aussteuerbar ist; und/oder b) bei einer Funktionsstörung des Anhängersteuermoduls: der Anhängerbremsdruck in Abhängigkeit des ersten oder zweiten Betriebsbrems-Bremsdrucks an dem Anhängerbremsdruck-Kupplungskopf aussteuerbar ist.

Das elektrisch gesteuerte Umsetzen der Bremsvorgabe ist beispielsweise bei einem elektrischen Ausfall in mindestens einem der Betriebsbremskreise nicht möglich. Ein elektrischer Ausfall schließt dabei im Rahmen der Erfindung insbesondere den Fall ein, dass ein Erzeugen des Betriebsbrems-Steuersignals im Betriebsbrems-Steuermodul fehlschlägt, z. B. weil das Betriebsbrems-Steuermodul einen elektrischen Defekt aufweist, und deshalb eine Vorgabe des Betriebsbrems-Bremsdruckes in Abhängigkeit des - in dem Fall nicht vorhandenen - Betriebsbrems-Steuersignals nicht möglich ist. Weiterhin kann ein elektrischer Ausfall vorliegen, wenn zwar ein Betriebsbrems-Steuersignal vom Betriebsbrems-Steuermodul erzeugt und ausgegeben werden kann, dieses aber beispielsweise aufgrund eines elektrischen Defekts in einer beliebigen elektrischen Komponente (beispielsweise einem Druckmodulator einem elektrischen Bremswertgeber) des betreffenden Betriebsbremskreises nicht in einen Betriebsbrems-Bremsdruck umgesetzt werden kann.

Erfindungsgemäß ist daher vorgesehen, dass für den Fall, dass beispielsweise das Betriebsbrems-Steuermodul ausfällt, der erste Betriebsbrems-Bremsdruck in Abhängigkeit des von dem Anhängersteuermodul vorgegebenen Anhängerbremsdrucks an die ersten Betriebsbremsen des mindestens einen ersten Betriebsbremskreises aussteuerbar ist. Der erste Betriebsbremskreis ist vorzugsweise für die Vorderachse des Fahrzeugs vorgesehen. Das Anhängersteuermodul steuert über den Anhängerbremsdruckanschluss den Anhängerbremsdruck aus. Der Anhängerbremsdruck wird dazu verwendet, die Betriebsbremsen des Anhängers zu betätigen. Erfindungsgemäß wird also der Anhängerbremsdruck oder ein von diesem abgeleiteter Druck an die ersten Betriebsbremsen des ersten Betriebsbremskreises ausgesteuert. Der erste Betriebsbrems-Bremsdruck wird in diesem Fall pneumatisch durch das Anhängersteuermodul ausgesteuert.

Gleichzeitig wird der zweite Betriebsbrems-Bremsdruck in Abhängigkeit des von dem Anhängersteuermodul vorgegebenen Anhängerbremsdrucks an die zweiten Betriebsbremsen des mindestens einen zweiten Betriebsbremskreises ausgesteuert. Zusätzlich oder alternativ werden die Feststellbremsen in Abhängigkeit des vom Anhängersteuermodul ausgesteuerten Anhängerbremsdrucks zugespannt.

Bei den Feststellbremsen kann es sich um Federspeicherbremsen, um elektromechanische Feststellbremsen oder rein elektrische Feststellbremsen handeln. Im Falle von elektromechanische Feststellbremsen oder rein elektrische Feststellbremsen wird vorzugsweise ein elektrisches Signal von dem Anhängersteuermodul an den Feststellbremsen bereitgestellt, und die Feststellbremsen dazu eingerichtet sind in Abhängig vom Empfang des Signals zuzuspannen. Das Signal kann auch von einem Drucksensor bereitgestellt werden, der den vom Anhängersteuermodul ausgesteuerten Anhängerbremsdruck erfasst und das Signal an den Feststellbremsen oder einem die Feststellbremsen steuernden Modul bereitstellt.

Vorzugsweise sind die Feststellbremsen als Federspeicherbremsen ausgebildet und den Federspeicherbremsen ein Parkbrems-Bremsdruck zuführbar, wobei bei einer Funktionsstörung des ersten und/oder zweiten Betriebsbremskreis der Parkbrems-Bremsdruck direkt oder in Abhängigkeit des von dem Anhängersteuermodul vorgegebenen Anhängerbremsdrucks aussteuerbar ist. In diesem Fall wird vorzugsweise zusätzlich oder alternativ der Parkbrems-Bremsdruck von dem Anhängersteuermodul ausgesteuert. Der zweite Betriebsbremskreis ist vorzugsweise der Bremskreis für die Hinterachse des Fahrzeugs. An der Hinterachse des Fahrzeugs sind typischerweise Federspeicher angeordnet. Es kann daher bevorzugt sein, anstatt des zweiten Betriebsbrems-Bremsdrucks einen Parkbrems-Bremsdruck an die Federspeicher auszusteuern, um diese in dem Fehlerfall anstelle der Betriebsbremsen des zweiten Betriebsbremskreises zu verwenden. Dabei kann vorgesehen sein, dass der Parkbrems-Bremsdruck direkt von dem Anhängersteuermodul ausgesteuert wird, oder der Parkbrems-Bremsdruck wird in Abhängigkeit des von dem Anhängersteuermodul vorgegebenen Anhängerbremsdrucks ausgesteuert, beispielsweise an ein Parkbrems-Steuermodul des Parkbremskreises.

Auf diese Weise werden bei einer Funktionsstörung des ersten und/oder zweiten Betriebsbremskreises sowohl die ersten Betriebsbremsen des ersten Betriebsbremskreises als auch die zweiten Betriebsbremsen des zweiten Betriebsbremskreises bzw. die Feststellbremsen redundant angesteuert. Fällt nur einer der Betriebsbremskreise aus, ist es auch bevorzugt nur die ersten bzw. die zweiten Betriebsbremsen bzw. die entsprechenden Feststellbremsen einzubremsen.

Weiterhin ist gemäß der Erfindung zusätzlich oder alternativ vorgesehen, dass bei einer Funktionsstörung des Anhängersteuermoduls der Anhängerbremsdruck in Abhängigkeit des ersten Betriebsbrems-Bremsdrucks an dem Anhängerbremsdruck-Kupplungskopf aussteuerbar ist. Vorzugsweise ist der Anhängerbremsdruck in Abhängigkeit des ersten Betriebsbrems-Bremsdrucks an dem Anhängerbremsdruckanschluss aussteuerbar. In diesem Fall wird also als Rückfallebene die umgekehrte Redundanz verwendet: Der erste Betriebsbrems-Bremsdruck wird als Steuerdruck für den Anhängerbremsdruck verwendet, sodass das Anhängersteuermodul den Anhängerbremsdruck in Abhängigkeit des ersten Betriebsbrems-Bremsdrucks an dem Anhängerbremsdruck-Kupplungskopf aussteuern kann. In diesem Fall wird als pneumatischer Redundanzdruck dem Anhängersteuermodul der erste Betriebsbrems-Bremsdruck zugeführt.

Auf diese Weise ist eine wechselseitige Redundanz erreicht. Fallen die Betriebsbremskreise des Fahrzeugs aus, wird die Ansteuerung der Betriebsbremsen oder der Federspeicher des Fahrzeugs über das Anhängersteuermodul, nämlich mittels des Anhängerbremsdrucks, realisiert. Im umgekehrten Fall wird der Anhängerbremsdruck unter Verwendung des ersten und zweiten Betriebsbremskreises ausgesteuert, wenn keine selbstständige Aussteuerung des Anhängerbremsdrucks über das Anhängersteuermodul möglich ist. Durch eine solche wechselseitige Redundanz ist die Sicherheit erhöht.

Gemäß einer bevorzugten Ausführungsform weist das Anhängersteuermodul einen Redundanz-Ausgang auf, wobei das Anhängersteuermodul dazu ausgebildet ist, den Anhängerbremsdruck über den Redundanz-Ausgang auszugeben. In einer Variante hierzu ist an einer mit dem Anhängerbremsdruckanschluss verbundenen Leitung, die zum Anhängerbremsdruck-Kupplungskopf führt, eine Abzweigung vorgesehen. Über den Redundanz-Ausgang wird der Anhängerbremsdruck redundant ausgegeben und vorzugsweise über eine pneumatische Leitung dem ersten und/oder zweiten Betriebsbremskreis bereitgestellt. Es ist nicht erforderlich, dass das Anhängersteuermodul einen separaten Redundanz-Ausgang aufweist, ebenso kann eine Abzweigung in einer Leitung, die den Anhängerbremsdruckanschluss mit dem Anhängerbremsdruck-Kupplungskopf verbindet, vorgesehen sein, um so den Anhängerbremsdruck abzugreifen. Vorzugsweise weist das Anhängersteuermodul ein Absperrventil auf, um eine Aussteuerung des Anhängerbremsdrucks an dem Redundanz-Ausgang zu verhindern. Das Absperrventil weist vorzugsweise eine erste und eine zweite Schaltstellung auf, wobei es in der ersten Schaltstellung offen ist und in der zweiten Schaltstellung geschlossen. Vorzugsweise ist das Absperrventil elektrisch gesteuert und stromlos in der ersten Schaltstellung. Das Absperrventil wird vorzugsweise von dem Betriebsbrems-Steuermodul gesteuert, sodass es bei einem fehlerfreien Betrieb bestromt ist. Der Anhängerbremsdruck wird vorzugsweise von dem Anhängersteuermodul während des Betriebs des Fahrzeugs durch den Empfang einer Bremsvorgabe, vorzugsweise einer elektronischen Bremsvorgabe eines elektrischen Bremswertgebers, erzeugt.

Alternativ oder zusätzlich ist es auch möglich, den Anhängerbremsdruck basierend auf dem Parkbremsdruck und/oder einem den Parkbremsdruck vorgebenden Parkbrems-Steuerdruck zu erzeugen, der auszusteuern ist, um die Bremsvorgabe im Parkbremskreis über die Federspeicherbremsen umzusetzen. Diese Variante ist insbesondere bevorzugt für die sogenannte "europäische Anhängersteuerung". Hierbei ist es erforderlich, den Anhänger im abgestellten Zustand des Fahrzeugs in Übereinstimmung mit den Federspeichern zu bremsen. Werden die Federspeicher zugespannt, das heißt entlüftet, soll gleichzeitig der Anhänger über die Betriebsbremsen gebremst werden, wozu die Aussteuerung des Anhängerbremsdrucks erforderlich ist. Hierzu weist das Anhängersteuermodul vorzugsweise ein inverses Relaisventil auf, das eine Invertierung des Parkbremsdrucks oder einen den Parkbremsdruck vorgebenden Parkbrems-Steuerdruck invers als Anhängerbremsdruck aussteuert. Dies ist erforderlich, da die Federspeicher, wie oben beschrieben, invers wirken. Unter einer Invertierung wird hierbei im Rahmen der Erfindung verstanden, dass das Anhängersteuermodul bzw. ein inverses Relaisventil dafür sorgt, dass ein zum Parkbrems-Bremsdruck und/oder Parkbrems-Steuerdruck umgekehrt proportionaler Anhängerbremsdruck erzeugt und ausgegeben wird. Dadurch kann vorteilhafterweise erreicht werden, dass ein im Parkbremskreis zur Ansteuerung der Federspeicherbremsen erzeugbarer Parkbrems-Bremsdruck und/oder Parkbrems-Steuerdruck, die jeweils die dem Parkbremskreis vorgegebene Bremsvorgabe charakterisieren, nach der Invertierung unmittelbar dazu verwendet werden kann, die Betriebsbremsen des Anhängers anzusteuern und darüber die Bremsvorgabe in mindestens einem Betriebsbremskreis umzusetzen. Das heißt, über die Betriebsbremsen in den Betriebsbremskreisen wird in Abhängigkeit des invertierten Parkbrems-Bremsdrucks und/oder des invertierten Parkbrems-Steuerdrucks in etwa dieselbe Bremswirkung erzielt wie über die Federspeicherbremsen im Parkbremskreis in Abhängigkeit des Parkbrems-Bremsdrucks und/oder des Parkbrems-Steuerdrucks. Somit kann bei einem elektrischen Ausfall in den Betriebsbremskreisen auf eine aufwendige Druckregelung zum Erzeugen des Betriebsbrems-Bremsdrucks verzichtet werden.

Das Anhängersteuermodul kann hierbei ergänzend für eine Skalierung sorgen, d. h. die Bremswirkung an den Betriebsbremsen kann gegenüber der Bremswirkung an den Federspeicherbremsen um einen Faktor skaliert, d. h. erhöht oder reduziert werden, beispielsweise zum Verbessern der Fahrstabilität des Fahrzeuges beim Bremsen. Weiterhin kann vorgesehen sein, den Anhängerbremsdruck lediglich einem Betriebsbremskreis, insbesondere dem ersten Betriebsbremskreis (z. B. einem Vorderachs-Betriebsbremskreis), oder auch an weitere Betriebsbremskreise (z. B. einem Hinterachs-Betriebsbremskreis) im Fahrzeug vorzugeben, falls ein elektrischer Ausfall vorliegt und der Ausfall durch eine Bremsung an weiteren Fahrzeugachsen mit Betriebsbremsen kompensiert werden soll. Die im Folgenden beschriebenen Ausführungsvarianten sind dementsprechend an lediglich einer oder ggf. auch an weiteren Fahrzeugachsen bzw. in weiteren Betriebsbremskreisen in identischer Weise vorzusehen.

Die Bremsvorgabe kann im Rahmen der Erfindung eine automatisiert angeforderte Assistenz-Bremsvorgabe sein, die automatisiert von einem Assistenz-Steuermodul erzeugt wird. Das Assistenz-Steuermodul ist dazu vorgesehen, das Fahrzeug automatisiert anhand von Umfeld-Informationen zu steuern, wobei das Fahrzeug anhand der Assistenz-Bremsvorgabe automatisiert abgebremst werden kann und die Assistenz-Bremsvorgabe dazu sowohl über den ersten und zweiten Betriebsbremskreis als vorzugsweise auch über den Parkbremskreis umsetzbar ist. Weiterhin kann die Bremsvorgabe eine manuell vom Fahrer über eine Parkbrems-Betätigungsvorrichtung angeforderte Parkbrems-Bremsvorgabe und/oder eine manuell über einen elektrischen Bremswertgeber (elektrisches Bremspedal), angeforderte Betriebsbrems-Bremsvorgabe sein, die auf diesem Wege über das Anhängersteuermodul auch redundant an die Betriebsbremsen im jeweiligen Betriebsbremskreis zur Umsetzung vorgegeben werden können und umgekehrt.

Bei einem elektrischen Ausfall des mindestens einen ersten oder zweiten Betriebsbremskreises, des Parkbremskreises oder des Anhängersteuermoduls kann im Rahmen einer redundanten Bremsung vorgesehen sein, die jeweiligen Bremsvorgaben an die jeweils noch funktionierenden Bremskreise auszusteuern, um den elektrischen Ausfall zu kompensieren. Dies kann durch eine entsprechende Vernetzung der jeweiligen Komponenten, z. B. über ein beliebiges fahrzeuginternes (Bus-)Netzwerk oder CAN-Bus oder über eine Direktverbindung der einzelnen Komponenten, gewährleistet werden. Demnach können alle genannten Bremsvorgaben als redundante Bremsvorgaben in jedem der Bremskreise dienen, die bei einem elektrischen Ausfall eines der Betriebsbremskreise über den Parkbremskreis in das Bremssystem eingesteuert und über das Inverter-Steuerventil an den mindestens einen Betriebsbremskreis ausgesteuert werden können.

Gemäß einer bevorzugten Ausführungsform weist das elektronisch steuerbare Bremssystem einen elektronischen Bremswertgeber auf, der zum Übertragen einer manuell vorgegebenen Betriebsbrems-Bremsvorgabe mit dem Betriebsbrems-Steuermodul und dem Anhängersteuermodul verbunden ist. Der elektronische Bremswertgeber ist vorzugsweise als elektronisches Bremspedal ausgebildet. Gemäß dieser Ausführungsform weist das Fahrzeug kein pneumatisches Bremspedal auf und auch kein elektropneumatisches Bremspedal, welches neben einer elektronischen Bremsvorgabe auch redundant eine pneumatische Bremsvorgabe aussteuern kann. Der elektronische Bremswertgeber ist über eine erste Signalleitung mit dem Betriebsbrems-Steuermodul und über eine zweite Signalleitung mit dem Anhängersteuermodul verbunden. Hierdurch wird die elektronische Betriebsbrems-Bremsvorgabe redundant ausgegeben. Einerseits empfängt das Betriebsbrems-Steuermodul die Betriebsbrems-Bremsvorgabe, und andererseits empfängt das Anhängersteuermodul die Betriebsbrems-Bremsvorgabe. Für den Fall, dass das Betriebsbrems-Steuermodul ausfällt, kann dann die Betriebsbrems-Bremsvorgabe immer noch von dem Anhängersteuermodul verarbeitet werden; für den umgekehrten Fall, dass das Anhängersteuermodul ausfällt, kann die Betriebsbrems-Bremsvorgabe immer noch von dem Betriebsbrems-Steuermodul umgesetzt werden. Hierdurch wird also eine redundante Aussteuerung erreicht.

Das Anhängersteuermodul ist vorzugsweise dazu ausgebildet, die Betriebsbrems-Bremsvorgabe umzusetzen und in Abhängigkeit der Betriebsbrems-Bremsvorgabe den Anhängerbremsdruck auszusteuern. Dazu weist das Anhängersteuermodul vorzugsweise eine eigene elektronische Steuereinheit auf, die ein entsprechendes Betriebsbrems-Signal empfängt und ein oder mehrere elektromagnetische Ventile entsprechend schaltet, um den Anhängerbremsdruck an dem Anhängerbremsdruckanschluss und/oder an dem Redundanz-Ausgang auszusteuern. Die Aussteuerung kann optional luftmengenverstärkt erfolgen.

Der Parkbremskreis im elektronisch steuerbaren Bremssystem kann gemäß einer ersten Alternative ein Parkbrems-Steuermodul aufweisen, das den Parkbrems-Bremsdruck in Abhängigkeit der Bremsvorgabe erzeugt, wobei die Bremsvorgabe in dieser Alternative elektrisch an das Parkbrems-Steuermodul übertragen wird. Das Parkbrems-Steuermodul ist mit den Federspeicherbremsen des Parkbremskreises verbunden, um den Parkbrems-Bremsdruck pneumatisch an die Federspeicherbremsen zu übertragen. D. h. es liegt eine elektrisch gesteuerte Parkbremse vor.

Die Bremsvorgabe an den Parkbremskreis kann im Rahmen der Erfindung eine automatisiert angeforderte Assistenz-Bremsvorgabe sein, die automatisiert von dem Assistenz-Steuermodul erzeugt wird. Weiterhin kann die Bremsvorgabe eine manuell vom Fahrer über eine Parkbrems-Betätigungsvorrichtung angeforderte Parkbrems-Bremsvorgabe sein.

Vorzugsweise, ist das Parkbrems-Steuermodul der elektrisch gesteuerten Parkbremse auch mit dem Anhängersteuermodul verbunden, um den Parkbrems-Bremsdruck oder einen damit zusammenhängenden Druck, beispielsweise eine intern im Parkbrems-Steuermodul erzeugten Steuerdruck, pneumatisch an das Anhängersteuermodul zu übertagen und darin zu invertieren und als Anhängerbremsdruck auszugeben.

Gemäß einer alternativen Ausführungsform ist eine konventionelle, rein pneumatische Parkbremse vorgesehen, wobei dazu im Parkbremskreis ein Parkbremsventil angeordnet ist, das vom Fahrer manuell betätigt werden kann, um die Parkbrems-Bremsvorgabe anzufordern. Das Parkbremsventil gibt in Abhängigkeit der Parkbrems-Bremsvorgabe einen Parkbrems-Steuerdruck aus, der in einem Relaisventil luftmengenverstärkt und anschließend als Parkbrems-Bremsdruck an die Federspeicherbremsen ausgegeben wird, um die Parkbrems-Bremsvorgabe umzusetzen. Der vom Parkbremsventil ausgegebene Parkbrems-Steuerdruck oder ein damit zusammenhängender Druck wird dabei vorzugsweise für den Redundanzfall an das Anhängersteuermodul über eine Druckleitung übertragen und darin über das inverse Relaisventil invertiert, um den Anhängerbremsdruck vorzugeben.

Somit können in zwei Alternativen eine Parkbrems-Bremsvorgabe über eine pneumatische Parkbremse oder eine Parkbrems-Bremsvorgabe und/oder eine Assistenz-Bremsvorgabe und/oder auch eine Betriebsbrems-Bremsvorgabe über eine elektrische Parkbremse im Parkbremskreis an das Anhängersteuermodul übertragen werden. Bei einem elektrischen Ausfall des ersten und/oder zweiten Betriebsbremskreises kann also auf den im Fahrzeug vorhandenen Parkbremskreis zurückgegriffen werden, um über diesen eine Bremsvorgabe in Form der manuellen Parkbrems-Bremsvorgabe und/oder Betriebsbrems-Bremsvorgabe und/oder der automatisiert angeforderten Assistenz-Bremsvorgabe aufzunehmen und über das Anhängersteuermodul an die Betriebsbremsen umzuleiten und diese somit redundant anzusteuern.

Gemäß einer weiteren bevorzugten Ausführungsform kann das Parkbrems-Steuermodul auch im Anhängersteuermodul integriert sein und die Assistenz-Bremsvorgabe und/oder die Parkbrems-Bremsvorgabe und/oder die Betriebsbrems-Vorgabe können elektrisch an das Anhängersteuermodul übertragen werden, z. B. über ein (Bus-)Netzwerk und/oder eine Direktverbindung. Im Anhängersteuermodul kann über das Parkbrems-Steuermodul aus der Assistenz-Bremsvorgabe und/oder der Parkbrems-Bremsvorgabe der Parkbrems-Bremsdruck erzeugt werden und dieser über einen Parkbrems-Ausgang am Anhängersteuermodul an die Federspeicherbremsen übertragen werden, falls eine Bremsung über die Federspeicherbremsen gewünscht ist.

Über eine im Anhängersteuermodul integrierte elektronische Steuereinheit, die vorzugsweise gemeinsam das Anhängersteuermodul und das Parkbrems-Steuermodul steuert, und ein integriertes Vorsteuermodul mit elektrisch steuerbaren Druckventilen, kann aus der Assistenz-Bremsvorgabe und/oder der Parkbrems-Bremsvorgabe und/oder der Betriebsbrems-Bremsvorgabe der Anhängerbremsdruck elektronisch gesteuert erzeugt und an den Anhängerbremsdruckanschluss ausgegeben werden, wobei der im Parkbrems-Steuermodul erzeugte Parkbrems-Bremsdruck umgekehrt proportional zu dem vom Vorsteuermodul erzeugten Anhängerbremsdruck ist. Der dadurch erzeugte Anhängerbremsdruck wird dann ebenfalls redundant dafür genutzt, die Betriebsbremsen des ersten und/oder zweiten Betriebsbremskreises anzusteuern.

Um den vom Anhängersteuermodul über den Anhängerbremsdruckanschluss ausgegebenen Anhängerbremsdruck bei einem elektrischen Ausfall der Betriebsbremskreise an die Betriebsbremsen aussteuern zu können und diesen somit in den jeweiligen Betriebsbremskreis einspeisen zu können, ist eine vom Anhängerbremsdruckanschluss oder vom Redundanz-Ausgang ausgehende Redundanz-Druckleitung zu den jeweiligen Betriebsbremskreisen geführt. Die Position der Einspeisung in den jeweiligen Betriebskreis kann wie folgt festgelegt sein:
Zunächst ist in dem mindestens einen ersten Betriebsbremskreis ein erster Druckmodulator angeordnet, wobei der erste Druckmodulator einen ersten Druckmodulator-Ausgang aufweist und der erste Druckmodulator ausgebildet ist, in Abhängigkeit des ersten Betriebsbrems-Steuersignals einen ersten Druckmodulator-Ausgangsdruck zu erzeugen und über den ersten Druckmodulator-Ausgang auszugeben, wobei der erste Druckmodulator-Ausgangsdruck als erster Betriebsbrems-Bremsdruck an die ersten Betriebsbremsen übertragbar ist; und in dem mindestens einen zweiten Betriebsbremskreis ein zweiter Druckmodulator angeordnet ist, wobei der zweite Druckmodulator einen zweiten Druckmodulator-Ausgang aufweist und der zweite Druckmodulator ausgebildet ist, in Abhängigkeit des zweiten Betriebsbrems-Steuersignals einen zweiten Druckmodulator-Ausgangsdruck zu erzeugen und über den zweiten Druckmodulator-Ausgang auszugeben, wobei der zweite Druckmodulator-Ausgangsdruck als zweiter Betriebsbrems-Bremsdruck an die zweiten Betriebsbremsen übertragbar ist. Dies ist im Normalbetrieb, d. h. ohne einen elektrischen Ausfall in den Betriebsbremskreisen, des Bremssystems der Fall.

Gemäß einer Ausführungsform weist der erste Druckmodulator einen ersten pneumatischen Redundanzdruckanschluss auf, wobei dem ersten pneumatischen Redundanzdruckanschluss der Anhängerbremsdruck als erster Redundanzdruck vorgegeben werden kann. Die Einspeisung des Anhängerbremsdrucks in den ersten Betriebsbremskreis kann somit gemäß dieser Ausführung über den pneumatischen Redundanzdruckanschluss am ersten Druckmodulator erfolgen.

Die wahlweise Vorgabe des Redundanzdruckes erfolgt vorzugsweise über ein Redundanzventil, das dem Redundanzdruckanschluss vorgeschaltet und/oder nachgeschaltet ist, wobei das Redundanzventil in zwei Redundanzventil-Schaltstellungen gebracht werden kann und das Redundanzventil in einer ersten Redundanzventil-Schaltstellung den im Anhängersteuermodul als Redundanzdruck erzeugten Anhängerbremsdruck aussperrt; und in einer zweiten Redundanzventil-Schaltstellung den im Anhängersteuermodul als Redundanzdruck erzeugten Anhängerbremsdruck an den erster Redundanzdruckanschluss freigeben kann zum redundanten Ansteuern des Druckmodulators. Üblicherweise weist ein Druckmodulator an dem Redundanzdruckanschluss ein nachgeschaltetes Redundanzventil auf. Der Redundanzdruckanschluss des ersten Druckmodulators wird in üblichen Ausführungsformen, wie sie im Stand der Technik bekannt sind, mit einem pneumatischen Redundanzdruckanschluss eines elektropneumatischen oder pneumatischen Bremspedals verbunden. Da im Rahmen der Erfindung, aber ein rein elektrisches Bremspedal verwendet wird, ist der Redundanzdruckanschluss des ersten Druckmodulators frei und wird gemäß der Erfindung an den Redundanz-Ausgang des Anhängersteuermoduls oder an den Anhängerbremsdruckanschluss angeschlossen.

Zusätzlich zu dem internen, nachgeschalteten Redundanzventil kann vorgesehen sein, dass ein vorgeschaltetes Redundanzventil vorgesehen ist. Das zusätzliche Redundanzventil kann dazu eingesetzt werden, bei der sogenannten "europäischen Anhängersteuerung" zu verhindern, dass im geparkten Fahrzeug die ersten Betriebsbremsen des ersten Betriebsbremskreises dauerhaft mit eingebremst werden. Die Aussteuerung des ersten Betriebsbrems-Bremsdrucks über den ersten Redundanzdruckanschluss des ersten Druckmodulators soll nur im Fehlerfall ausgeführt werden, wenn der erste und/oder zweite Betriebsbremskreis gestört sind. In diesem Fall ist der erste Druckmodulator in der Regel stromlos. Das nachgeschaltete Redundanzventil des ersten Druckmodulators ist vorzugsweise so ausgelegt, dass es stromlos offen ist, sodass in dem stromlosen Fall des ersten Druckmodulators der Anhängerbremsdruck als Redundanzdruck an den ersten Druckmodulator aussteuerbar ist und durchgelassen wird, sodass über den ersten Redundanzdruckanschluss an dem ersten Druckmodulator der erste Betriebsbrems-Bremsdruck an die ersten Betriebsbremsen aussteuerbar ist.

Im abgestellten Zustand des Fahrzeugs ist allerdings der erste Druckmodulator ebenfalls stromlos. Bei der "europäischen Anhängersteuerung" wird der Anhänger über die Betriebsbremsen des Anhängers permanent mit eingebremst, das bedeutet, dass permanent ein Anhängerbremsdruck an dem Anhängerbremsdruckanschluss des Anhängersteuermoduls ausgesteuert wird. Wird in diesem Fall der erste Redundanzdruckanschluss des ersten Druckmodulators mit dem Anhängerbremsdruckanschluss des Anhängersteuermoduls verbunden, liegt an dem ersten Redundanzdruckanschluss im abgestellten Zustand des Fahrzeugs permanent der Anhängerbremsdruck an. Durch das zusätzliche vorgeschaltete Redundanzventil kann dieser Druck ausgesperrt werden, sodass im abgestellten Zustand des Fahrzeugs nicht die ersten Betriebsbremsen des ersten Betriebsbremskreises mit eingebremst werden. Das vorgeschaltete Redundanzventil ist daher vorzugsweise so ausgelegt, dass es stromlos geschlossen ist. Vorzugsweise wird das vorgeschaltete Redundanzventil aus diesem Grund von einer elektrischen Quelle versorgt, die unabhängig von dem ersten Betriebsbremskreis ist, sodass es im Fehlerfall des ersten Betriebsbremskreises nicht stromlos geschaltet wird.

Weiterhin ist bevorzugt, dass der zweite Druckmodulator einen zweiten Redundanzdruckanschluss aufweist und dem zweiten Redundanzdruckanschluss der Anhängerbremsdruck als Redundanzdruck vorgegeben werden kann. Auf diese Weise ist es möglich, auch die zweiten Betriebsbremsen des zweiten Betriebsbremskreises redundant druckgesteuert über den Anhängerbremsdruck anzusteuern. Wie bereits oben beschrieben wurde, ist es alternativ möglich, für den zweiten Betriebsbremskreis die Federspeicher zu verwenden. Für den Fall, dass der zweite Betriebsbremskreis über keine Federspeicher verfügt oder es gewünscht ist, dass im Fehlerfall die zweiten Betriebsbremsen des zweiten Betriebsbremskreises redundant angesteuert werden, ist diese Ausführungsform bevorzugt. Ebenso wie in Bezug auf den ersten Druckmodulator beschrieben ist es möglich, dem zweiten Druckmodulator am zweiten Redundanzdruckanschluss ein zweites Redundanzdruckventil vor- und/oder nachzuschalten. Die Funktionalität des zweiten vorgeschalteten Redundanzventils und/oder des zweiten nachgeschalteten Redundanzventils ist entsprechend den ersten und zweiten vor- und nachgeschalteten Redundanzventilen, wie sie oben beschrieben wurden. Insofern wird vollumfänglich auf die obige Beschreibung Bezug genommen.

Der erste und/oder zweite Druckmodulator ist vorzugsweise dazu ausgebildet, falls eine Vorgabe des Betriebsbrems-Bremsdruckes in Abhängigkeit eines Betriebsbrems-Steuersignals das von dem Betriebsbrems-Steuermodul bereitstellbar ist, nicht möglich ist, d. h. ein elektrischer Ausfall im jeweiligen ersten und/oder zweiten Betriebsbremskreis vorliegt, den ersten bzw. zweiten Druckmodulator-Ausgangsdruck in Abhängigkeit des dem ersten bzw. zweiten Redundanzdruckanschluss wahlweise zugeführten Anhängerbremsdrucks zu erzeugen. Das Betriebsbrems-Steuersignal wird üblicherweise von dem Betriebsbrems-Steuermodul in Abhängigkeit des Empfangs einer Bremsvorgabe an dem ersten und/oder zweiten Druckmodulator bereitgestellt.

Gemäß einer weiteren bevorzugten Ausführungsform weist das Anhängersteuermodul einen dritten Redundanzdruckanschluss auf, wobei der erste oder zweite Betriebsbrems-Bremsdruck als dritter Redundanzdruck an dem dritten Redundanzdruckanschluss aussteuerbar ist, wobei das Anhängersteuermodul dazu ausgebildet ist, in Abhängigkeit des dritten Redundanzdrucks den Anhängerbremsdruck an dem Anhängerbremsdruckanschluss auszusteuern. Hierdurch ist eine zweite Rückfallebene ausgestaltet. Diese Aussteuerung des Anhängerbremsdrucks ist für den Fall vorgesehen, dass eine Funktionsstörung im Anhängersteuermodul auftritt. In diesem Fall ist das Anhängersteuermodul in der Regel stromlos und kann nicht basierend auf einer Bremsvorgabe des elektrischen Bremswertgebers den Anhängerbremsdruck aussteuern. Der Anhängerbremsdruck wird in diesem Fall redundant erzeugt, basierend auf dem ersten Betriebsbremsdruck des ersten Betriebsbremskreises oder dem zweiten Betriebsbremsdruck des zweiten Betriebsbremskreises, der, vorzugsweise über eine Druckleitung, an dem dritten Redundanzdruckanschluss des Anhängersteuermoduls bereitgestellt wird. Die Druckleitung, die zum dritten Redundanzdruckanschluss führt, kann beispielsweise eine Abzweigleitung einer Betriebsbrems-Bremsdruckleitung des ersten bzw. zweiten Druckmodulators sein.

Ebenso wie mit Bezug auf die ersten und zweiten Redundanzdruckanschlüsse des ersten und zweiten Druckmodulators beschrieben, kann auch an dem dritten Redundanzdruckanschluss ein drittes vorgeschaltetes Redundanzventil und/oder ein drittes nachgeschaltetes Redundanzventil vorgesehen sein. Das dritte vor- und/oder nachgeschaltete Redundanzventil ist vorzugsweise stromlos offen und abhängig von dem Anhängersteuermodul ausgebildet. Für den Fall, dass das Anhängersteuermodul stromlos ist, öffnet das dritte vor- und/oder nachgeschaltete Redundanzventil vorzugsweise, sodass der erste Betriebsbremsdruck als dritter Redundanzdruck an dem dritten Redundanzdruckanschluss aussteuerbar ist.

Um in den jeweiligen Bremskreisen eine Aussteuerung der jeweiligen Drücke bewirken zu können, ist vorzugsweise vorgesehen, dass der mindestens eine erste und zweite Betriebsbremskreis von einer ersten Energiequelle, und das Anhängersteuermodul von einer zweiten Energiequelle mit Energie versorgt werden, wobei die erste Energiequelle unabhängig von der zweiten Energiequelle ist. Dadurch soll gewährleistet werden, dass bei einem Ausfall der ersten Energiequelle für die Betriebsbremskreise, von dem Anhängersteuermodul weiterhin Drücke ausgesteuert werden können, um den Anhängerbremsdruck an den oder die ausgefallenen Betriebsbremskreise vorgeben zu können, und umgekehrt.

Gemäß einem zweiten Aspekt der Erfindung wird die eingangs genannte Aufgabe durch ein Fahrzeug gelöst, insbesondere Nutzfahrzeug, mit einem elektronisch steuerbaren Bremssystem nach einer der vorstehend beschriebenen bevorzugten Ausführungsformen eines elektronisch steuerbaren Bremssystems gemäß dem ersten Aspekt der Erfindung.

Weiterhin wird die eingangs genannte Aufgabe in einem dritten Aspekt der Erfindung gelöst durch ein Verfahren zum Steuern eines elektronisch steuerbaren Bremssystems nach einer der vorstehend beschriebenen bevorzugten Ausführungsformen eines elektronisch steuerbaren Bremssystems gemäß dem ersten Aspekt der Erfindung, wobei das Verfahren wenigstens die folgenden Schritte aufweist:
- Feststellen, ob die Bremsvorgabe über den mindestens einen ersten Betriebsbremskreis und den mindestens einen zweiten Betriebsbremskreis elektrisch gesteuert durch das Betriebsbrems-Steuermodul umgesetzt werden kann;
- Erzeugen des Anhängerbremsdrucks in dem Anhängersteuermodul in Abhängigkeit einer dem Anhängersteuermodul vorgegebenen Bremsvorgabe; und falls ein durch das Betriebsbrems-Steuermodul elektrisch gesteuertes Umsetzen der Bremsvorgabe über den mindestens einen ersten Betriebsbremskreis und/oder den mindestens einen zweiten Betriebsbremskreis verhindert ist:
   - Erzeugen des ersten Betriebsbrems-Bremsdrucks in dem mindestens einen ersten Betriebsbremskreis in Abhängigkeit des in dem Anhängersteuermodul erzeugten Anhängerbremsdrucks; und/oder
   - Erzeugen des zweiten Betriebsbrems-Bremsdrucks in dem mindestens einen zweiten Betriebsbremskreis in Abhängigkeit des in dem Anhängersteuermodul erzeugten Anhängerbremsdrucks und/oder Zuspannen der Feststellbremsen.

Für den Fall, dass die Feststellbremsen als Federspeicherbremsen ausgebildet sind und den Federspeicherbremsen ein Parkbrems-Bremsdruck zuführbar, ist, umfasst das Zuspannen der Feststellbremsen vorzugsweise: Erzeugen des Parkbrems-Bremsdrucks in Abhängigkeit des in dem Anhängersteuermodul erzeugten Anhängerbremsdrucks.

Das heißt, es wird geprüft, ob die Bremsvorgabe, die beispielsweise von einem elektrischen Bremswertgeber oder einer Assistenzsteuereinheit stammen kann, von dem Betriebsbrems-Steuermodul umgesetzt werden kann. Dies kann beispielsweise dann nicht geschehen, wenn ein Fehler in dem Betriebsbrems-Steuermodul vorliegt oder in anderen Teilen des ersten und/oder zweiten Betriebsbremskreises, der dazu führt, dass Teile oder der gesamte erste und zweite Betriebsbremskreis stromlos sind. Für den Fall, dass festgestellt wird, dass das Umsetzen der Bremsvorgabe durch das Betriebsbrems-Steuermodul nicht möglich ist, wird gemäß diesem Verfahren der erste Betriebsbrems-Bremsdruck in dem ersten Betriebsbremskreis in Abhängigkeit des in dem Anhängersteuermodul erzeugten Anhängerbremsdrucks erzeugt. Das heißt, der Anhängerbremsdruck, der in diesem Fall immer noch ausgesteuert werden kann, wird als Redundanzdruck für den ersten Betriebsbrems-Bremsdruck verwendet. Vorzugsweise wird auch der zweite Betriebsbrems-Bremsdruck in Abhängigkeit des erzeugen Anhängerbremsdrucks ausgesteuert. Das heißt, der Anhängerbremsdruck wird auch als Redundanzdruck für den zweiten Betriebsbrems-Bremsdruck verwendet. Alternativ zur Aussteuerung des zweiten Betriebsbrems-Bremsdrucks wird der Parkbrems-Bremsdruck in Abhängigkeit des in dem Anhängersteuermodul erzeugten Anhängerbremsdrucks ausgesteuert. In diesem Fall werden also für den Fall, dass das Betriebsbrems-Steuermodul keinen Betriebsbrems-Bremsdruck aussteuern kann, anstelle der zweiten Betriebsbremsen die Feststellbremsen zum Bremsen des Fahrzeugs verwendet.

Das Verfahren weist ferner vorzugsweise die Schritte auf: Feststellen, ob die Bremsvorgabe durch das Anhängersteuermodul umgesetzt werden kann; und falls ein durch das Anhängersteuermodul elektrisch gesteuertes Umsetzen der Bremsvorgabe verhindert ist:
- Erzeugen des Anhängerbremsdrucks in Abhängigkeit des ersten oder zweiten Betriebsbrems-Bremsdrucks an dem Anhängerbremsdruck-Kupplungskopf.

Gemäß dieser Ausführungsform des Verfahrens wird also eine umgekehrte Redundanz erhalten: Für den Fall, dass die Bremsvorgabe nicht von dem Anhängersteuermodul umgesetzt werden kann und der Anhänger somit nicht mit einem elektrisch ausgesteuerten Anhängerbremsdruck von dem Anhängersteuermodul versorgt werden kann, wird der Anhängerbremsdruck redundant ausgesteuert, indem der erste oder zweite Betriebsbrems-Bremsdruck als Redundanzdruck verwendet wird. Es kann vorgesehen sein, dass der erste oder zweite Betriebsbrems-Bremsdruck unmittelbar an dem Anhängerbremsdruck-Kupplungskopf als Anhängerbremsdruck bereitgestellt wird. In diesem Fall ist eine Luftmengenverstärkung erforderlich, da die Luftmenge in diesem Fall gegenüber dem normalen Betriebsfall, in dem nur der erste oder zweite Betriebsbrems-Bremsdruck ausgesteuert werden muss, deutlich erhöht ist. Es kann ebenso vorgesehen sein, dass der erste oder zweite Betriebsbrems-Bremsdruck als redundanter Steuerdruck dem Anhängersteuermodul zugeführt wird, welches dann pneumatisch gesteuert den Anhängerbremsdruck aussteuert. Dies ist immer noch möglich, wenn das Anhängersteuermodul stromlos ist, da eine pneumatische Aussteuerung unabhängig von der Bestromung des Anhängersteuermoduls ist.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 ein elektronisch steuerbares Bremssystem gemäß einem ersten Ausführungsbeispiel mit einem Anhängersteuermodul und einem davon getrennten Parkbrems-Steuermodul;
Fig. 2 ein elektronisch steuerbares Bremssystem gemäß einem zweiten Ausführungsbeispiel mit integriertem Anhängersteuermodul und Parkbrems-Steuermodul und redundanter Ansteuerung der Federspeicher; und
Fig. 3 ein elektronisch steuerbares Bremssystem gemäß einem dritten Ausführungsbeispiel mit integriertem Anhängersteuermodul und Parkbrems-Steuermodul und redundanter Ansteuerung der zweiten Betriebsbremsen.

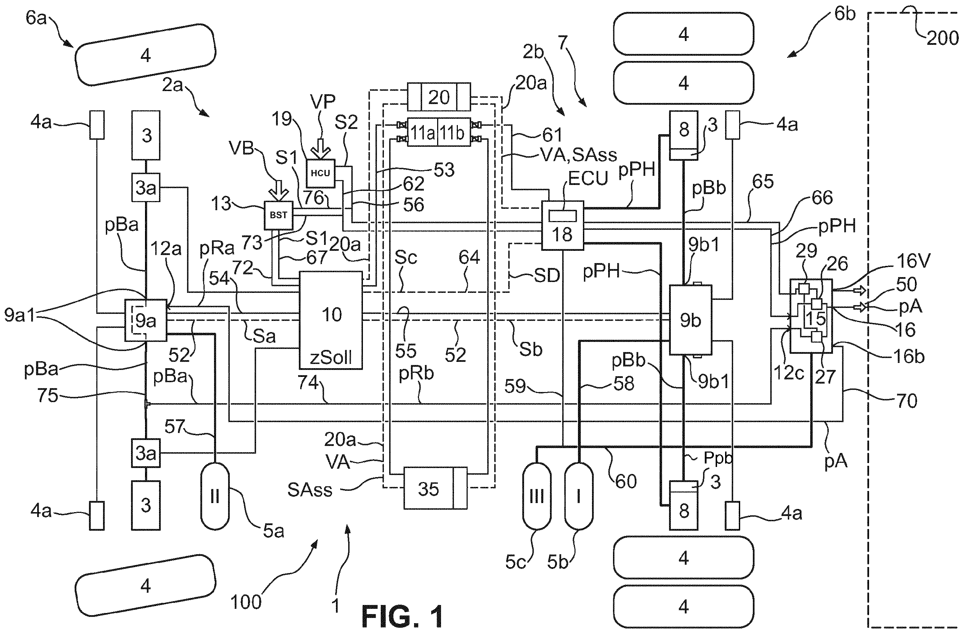

In Fig. 1 ist schematisch ein Fahrzeug 100 mit einem Bremssystem 1 dargestellt, das in einem ersten Betriebsbremskreis 2a und einem zweiten Betriebsbremskreis 2b über Betriebsbremsen 3 an den Rädern 4 abgebremst werden kann. Der erste Betriebsbremskreis 2a ist hier als Vorderachs-Betriebsbremskreis einer Vorderachse 6a und der zweite Betriebsbremskreis 2b ein Hinterachs-Betriebsbremskreis einer Hinterachse 6b zugeordnet. Es können auch weitere Fahrzeugachsen vorgesehen sein, denen die Betriebsbremskreise 2a und 2b oder weitere Betriebsbremskreise zugeordnet sind. Den Betriebsbremskreisen 2a, 2b ist achsweise jeweils ein erster Druckmittelvorrat 5a und ein zweiter Druckmittelvorrat 5b zugeordnet.

Der Hinterachse 6b ist weiterhin ein Parkbremskreis 7 zugeordnet, wobei die Räder 4 an der Hinterachse 6b in diesem Parkbremskreis 7 über Feststellbremsen 8, in diesem Fall als Federspeicherbremsen 8 ausgebildet, abgebremst werden können, so dass die Räder 4 der Hinterachse 6b sowohl im zweiten Betriebsbremskreis 2b (Hinterachs-Betriebsbremskreis) über die Betriebsbremsen 3 und im Parkbremskreis 7 über die Federspeicherbremsen 8 verzögert werden können. An der Hinterachse 6b sind dazu kombinierte Betriebs-/Federspeicherbremsen vorgesehen. Der Parkbremskreis 7 wird von einem eigenständigen dritten Druckmittelvorrat 5c mit Druckmittel versorgt.

Zum Betätigen der Betriebsbremsen 3 und somit zum Umsetzen einer angeforderten Bremsvorgabe, die durch eine Fahrzeug-Soll-Verzögerung zSoll oder einen Soll-Bremsdruck charakterisiert wird, ist in den beiden Betriebsbremskreisen 2a, 2b an der jeweiligen Fahrzeugachse 6a, 6b jeweils ein erster und zweiter Druckmodulator 9a, 9b angeordnet, wobei die ersten und zweiten Druckmodulatoren 9a, 9b gemäß diesem Ausführungsbeispiel elektrisch oder pneumatisch angesteuert werden können, um einen bestimmten Betriebsbrems-Bremsdruck pBa, pBb an die Betriebsbremsen 3 der jeweiligen Fahrzeugachse 6a, 6b auszusteuern und die Betriebsbremsen 3 somit zuzuspannen. Grundsätzlich kann der Betriebsbrems-Bremsdruck pBa, pBb für jede der einzelnen Betriebsbremsen 3 individuell vorgegeben werden, beispielsweise im Rahmen einer Bremsschlupfregelung, die anhand von Daten von Raddrehzahlsensoren 4a an den einzelnen Rädern 4 durchgeführt wird. An der Hinterachse 6b kann die Bremsschlupfregelung direkt durch den Hinterachs-Druckmodulator 9b erfolgen und an der Vorderachse 6a über den Betriebsbremsen 3 vorgeschaltete ABS-Steuerventile 3a.

Der erste Druckmodulator 9a ist mittels einer ersten Vorratsdruckzufuhrleitung 57 mit dem ersten Druckmittelvorrat 5a, und der zweite Druckmodulator 9b mittels einer zweiten Vorratsdruckzufuhrleitung 58 mit dem zweiten Druckmittelvorrat 5b verbunden.

Im normalen Fahrbetrieb werden die jeweiligen Druckmodulatoren 9a, 9b elektrisch über erste und zweite Betriebsbrems-Steuersignale Sa, Sb angesteuert, wobei die jeweiligen Betriebsbrems-Steuersignale Sa, Sb in einem Betriebsbrems-Steuermodul 10 in Abhängigkeit der jeweiligen Bremsvorgabe bzw. der Fahrzeug-Soll-Verzögerung zSoll derartig erzeugt werden, dass der jeweilige Druckmodulator 9a, 9b einen Betriebsbrems-Bremsdruck pBa, pBb an die Betriebsbremsen 3 aussteuert, mit dem die angeforderte Bremsvorgabe umgesetzt wird. Das Betriebsbrems-Steuersignal Sa, Sb kann dabei beispielsweise über einen CAN-Bus, ein anderes Netzwerk, ein analoges oder pulsweitenmoduliertes Steuersignal ausgegeben werden, mit dem in bekannter Weise im Druckmodulator 9a, 9b über Druckventile ein Druckmodulator-Ausgangsdruck pDa, pDb erzeugt wird, der über einen Druckmodulator-Ausgang 9a1, 9b1 als Betriebsbrems-Bremsdruck pBa, pBb an die jeweilige Betriebsbremse 3 ausgegeben wird. In diesem Ausführungsbeispiel sind der erste und zweite Druckmodulator 9a, 9b mittels eines ersten CAN-Bus 52 mit dem Betriebsbrems-Steuermodul 10 verbunden.

Die Druckmodulatoren 9a, 9b sind somit jeweils mit dem Betriebsbrems-Steuermodul 10 elektrisch verbunden, das die Bremswirkung in den beiden Betriebsbremskreisen 2a, 2b individuell elektrisch steuern kann und dabei als ein zentrales Steuermodul ausgebildet ist, das im Normalbetrieb für die elektrische Umsetzung der Bremsvorgabe in beiden Betriebsbremskreisen 2a, 2b verantwortlich ist. Das Betriebsbrems-Steuermodul 10 sowie die jeweiligen Druckmodulatoren 9a, 9b sowie weitere Komponenten der jeweiligen Betriebsbremskreisen 2a, 2b werden gemäß diesem Ausführungsbeispiel von einer ersten Energiequelle 11a mit Energie versorgt. Zu diesem Zweck ist das Betriebsbrems-Steuermodul 10 über eine erste Stromleitung 53 mit der Energiequelle 11a, der erste Druckmodulator 9a über eine zweite Stromleitung 54 mit dem Betriebsbrems-Steuermodul 10, und der zweite Druckmodulator 9b über eine dritte Stromleitung 55 ebenfalls mit dem Betriebsbrems-Steuermodul 10 verbunden.

Die Fahrzeug-Soll-Verzögerung zSoll kann hierbei manuell durch den Fahrer festgelegt werden, der durch eine manuelle Betätigung elektrischen Bremswertgebers 13 beispielsweise über ein elektrisches Bremspedal eine Betriebsbrems-Bremsvorgabe VB vorgibt, die über ein Betriebsbrems-Betätigungssignal S1 an das Betriebsbrems-Steuermodul 10 ausgegeben wird und aus der die Fahrzeug-Soll-Verzögerung zSoll folgt. Weiterhin kann im automatisierten Fahrbetrieb von einem Assistenz-Steuermodul 35 eine automatisiert vorgegebene Assistenz-Bremsvorgabe VA über ein Assistenz-Steuersignal SAss ausgegeben werden, die beispielsweise über einen Fahrzeugbus 20 mit entsprechenden Busleitungen 20a oder ein anderes Netzwerk im Fahrzeug 100 auch auf das Betriebsbrems-Steuermodul 10 übertragen wird und ebenfalls einer bestimmten Fahrzeug-Soll-Verzögerung zSoll entspricht.

Das Assistenz-Steuermodul 35 ist hierbei ausgebildet, das Fahrzeug 100 automatisiert anhand von Umfeldinformationen zu steuern, insbesondere gemäß der Assistenz-Bremsvorgabe VA abzubremsen, und in Abhängigkeit davon das Assistenz-Steuersignal SAss insbesondere an das Bremssystem 1 auszugeben.

Das Bremssystem 1 weist ferner ein Parkbrems-Steuermodul 18 auf, das im Parkbremskreis 7 beispielsweise in Abhängigkeit einer vom Fahrer manuell über eine Parkbrems-Betätigungseinrichtung 19 vorgegebenen Parkbrems-Bremsvorgabe VP einen Parkbrems-Bremsdruck pPH erzeugt und diesen oder einen im Parkbrems-Steuermodul 18 intern erzeugten Steuerdruck, in Abhängigkeit dessen der Parkbrems-Bremsdruck pPH erzeugt wird, an die Federspeicherbremsen 8 ausgibt, so dass über die Federspeicherbremsen 8 eine bestimmte Bremswirkung an der Hinterachse 6b erzielt werden kann. Dazu wird gemäß Fig. 1 bei Vorliegen einer Parkbrems-Bremsvorgabe VP von der Parkbrems-Betätigungseinrichtung 19 auf elektronischem Wege über eine Parkbrems-Signalleitung 56 ein Parkbrems-Betätigungssignal S2 an das Parkbrems-Steuermodul 18 ausgegeben. Im Rahmen dieser Parkbremsung ist hierbei lediglich ein vollständiges Öffnen oder Zuspannen der Federspeicherbremsen 8 vorgesehen. Beispielhaft ist ein derartiges Parkbrems-Steuermodul 18 in DE 10 2015 008 377 A1 beschrieben, deren Inhalt hiermit durch Bezugnahme im vollen Umfang eingeschlossen ist. Das Parkbrems-Steuermodul 18 ist über eine dritte Vorratsdruckzufuhrleitung 59 mit dem dritten Druckmittelvorrat 5c verbunden.

Mittels einer vierten Stromleitung 61 ist das Parkbrems-Steuermodul 18 mit einer zweiten Energiequelle 11b verbunden und wird von dieser gespeist. Die zweite Energiequelle 11b ist unabhängig von der ersten Energiequelle 11a, sodass das Parkbrems-Steuermodul 18 auch dann mit elektrischem Strom versorgt wird, wenn die erste Energiequelle 11a ausfallen sollte. Von dem Parkbrems-Steuermodul 18 verläuft eine fünfte Stromleitung 62 zur Parkbrems-Betätigungseinrichtung 19, sodass die Parkbrems-Betätigungseinrichtung 19 auch von der zweiten Energiequelle 11b versorgt wird.

Auch der elektrische Bremswertgeber 13 ist über eine Bremswertgeber-Signalleitung 63 mit dem Parkbrems-Steuermodul 18 verbunden, sodass das Parkbrems-Steuermodul 18 das Betriebsbrems-Betätigungssignal S1 erhält.

Weiterhin kann auch die automatisiert vorgegebene Assistenz-Bremsvorgabe VA über den Fahrzeugbus 20 und die Busleitung 20a bzw. das Assistenz-Steuersignal SAss an das Parkbrems-Steuermodul 18 übertragen und von diesem auch umgesetzt werden, beispielsweise im Rahmen einer automatisiert vorgegebenen Hilfsbremsfunktion oder einer automatisiert vorgegebenen Notbremsfunktion oder einer automatisiert vorgegebenen Parkbremsfunktion. Dazu wird der Parkbrems-Bremsdruck pPH von dem Parkbrems-Steuermodul 18 in Abhängigkeit dieser automatisiert vorgegebenen Parkbrems-Bremsvorgabe VP erzeugt und an die Federspeicherbremsen 8 ausgesteuert, um auch während der Fahrt eine unterstützende Bremsung oder im Stillstand ein Abstellen über den Parkbremskreis 7 und die Federspeicherbremsen 8 bewirken zu können. Im Rahmen dessen ist auch eine abgestufte Bremsung im Parkbremskreis 7 möglich.

In dieser Ausführungsform (Fig. 1) weist die Parkbrems-Steuermodul 18 eine elektronische Steuereinheit (ECU) auf. Das Parkbrems-Steuermodul 18 ist mittels der elektronischen Steuereinheit (ECU) dazu in der Lage, aus den Bremsanforderungen VA, VB und VP bzw. den Signalen S1, S2, SAss entsprechende interne Stellsignale für elektropneumatische Ventile zu bestimmen und basierend auf den Signalen S1, S2, SAss den Parkbremsdruck pPH auszusteuern. Ferner übernimmt das Parkbrems-Steuermodul 18 in dieser Ausführungsform (Fig. 1) auch die Intelligenz für ein Anhängersteuermodul 15. So ist das Parkbrems-Steuermodul 18 über einen zweiten CAN-Bus 64 mit der Betriebsbrems-Steuereinheit 10 verbunden und empfängt das Anhängerbremsdruck-Signal Sc, das als Anhängerbremsdrucksignal ausgebildet ist. Das Parkbrems-Steuermodul 18 ist über eine einfache Signalleitung 65 mit dem Anhängersteuermodul 15 verbunden, um so Signale für eine Vorsteuereinheit 29 des Anhängersteuermoduls 15 an dem Anhängersteuermodul 15 bereitzustellen. Weiterhin ist das Parkbrems-Steuermodul 18 über eine Parkbremsdruck-Steuerleitung 66 pneumatisch mit dem Anhängersteuermodul 15 verbunden. Das Anhängersteuermodul 15 ist dazu ausgebildet, einen Anhängerbremsdruck pA an dem Anhängerbremsdruckanschluss 16 bereitzustellen, der über eine pneumatische Leitung an dem Anhängerbremsdruck-Kupplungskopf 50 für den Anhänger 200 bereitgestellt wird. Das Anhängersteuermodul 15 ist über eine vierte Vorratsdruckzufuhrleitung 60 ebenfalls mit dem dritten Druckmittelvorrat 5c verbunden.

Der dem Anhängersteuermodul 15 über die Parkbremsdruck-Steuerleitung 66 zugeleitete Parkbrems-Bremsdruck pPH - oder ein damit zusammenhängender Druck-wird im Anhängersteuermodul 15 über ein in Fig. 1 lediglich schematisch dargestelltes inverses Relaisventil 26 invertiert und als Anhängerbremsdruck pA an den Anhängerbremsdruckanschluss 16 ausgegeben. Die Invertierung des Parkbrems-Bremsdruckes pPH ist hierbei vorgesehen, um mit dem Anhängerbremsdruck pA auch Betriebsbremsen ansteuern zu können, die bei hohen Betriebsbrems-Bremsdrücken zuspannen und bei niedrigen Betriebsbrems-Bremsdrücken öffnen. Der Parkbrems-Bremsdruck pPH hingegen wird unter Berücksichtigung davon ausgegeben, dass die Federspeicherbremsen 8 im Parkbremskreis 7 bei niedrigen Parkbrems-Bremsdrücken pPH zuspannen und bei hohen Parkbrems-Bremsdrücken pPH öffnen.

Eine derartige Invertierungsfunktion über ein inverses Relaisventil 26 im Anhängersteuermodul 15 ist in herkömmlichen Anhängersteuermodul bereits vorhanden, die dafür vorgesehen sind, einen am Fahrzeug 100 angehängten Anhänger 200 mit Betriebsbremsen über einen im Parkbremskreis 7 ausgesteuerten Parkbrems-Bremsdruck pPH abzubremsen und demnach in einer Parksituation, einer Hilfsbremssituation oder einer Notbremssituation auch den Anhänger 200 gemäß der Parkbrems-Bremsvorgabe VP oder der Assistenz-Bremsvorgabe VA gezielt einzubremsen. Ein zusätzlicher Vorratsdruck-Ausgang 16V am Anhängersteuermodul 15 dient hierbei dem Übertragen des Druckmittels aus dem dritten Druckmittelvorrat 5c an den Anhänger 200, wobei der Vorratsdruck-Ausgang 16V zum "roten Kupplungskopf" 15a führt.

Um bei einem elektrischen Ausfall weiterhin eine Umsetzung der Betriebsbrems-Bremsvorgabe VB oder der Assistenz-Bremsvorgabe VA, d. h. der Fahrzeug-Soll-Verzögerung zSoll, zu gewährleisten, kann auf mehrere Rückfallebenen ausgewichen werden. Durch die Rückfallebenen wird hierbei sichergestellt, dass das elektrisch steuerbare Bremssystem 1 für einen gewissen Automatisierungsgrad im Rahmen eines elektronisch gesteuerten autonomen Fahrbetriebs geeignet ist. Die Rückfallebenen sind wie folgt ausgestaltet:
Für den Fall, dass der erste Betriebsbremskreis 2a und/oder der zweite Betriebsbremskreis 2b ausfällt, beispielsweise, weil die erste Energiequelle 11a defekt ist, eine Bremswertsignalleitung 67, über die das Betriebsbrems-Betätigungssignal S1 an das Betriebsbrems-Steuermodul 10 übertragen wird, oder auch dass das Betriebsbrems-Steuermodul 10 selbst einen Defekt hat, ist eine erste redundante Aussteuerung von Bremsdrücken vorgesehen. Hierzu ist eine erste Redundanzdruckleitung 70 vorgesehen, die von dem Redundanz-Ausgang 16b des Anhängersteuermoduls 15 zu einem ersten Redundanzdruckanschluss 12a des ersten Druckmodulators 9a verläuft. An dem Redundanz-Ausgang 16b wird der Anhängerbremsdruck pA bereitgestellt, der auch an dem Anhängerbremsdruckanschluss 16 bereitgestellt wird. Insofern ist es auch denkbar, dass kein eigener Redundanz-Ausgang 16b an dem Anhängersteuermodul 15 vorgesehen ist; ebenso könnte die erste Redundanzdruckleitung 70 über ein T-Stück oder dergleichen mit dem Anhängerbremsdruckanschluss 16 verbunden sein.

Da das Parkbrems-Steuermodul 18 und auch das Anhängersteuermodul 15 von der zweiten Energiequelle 11b gespeist werden, können diese auch beim Ausfall der ersten Energiequelle 11a weiter arbeiten. Der elektrische Bremswertgeber 13 wird von beiden Energiequellen 11a, 11b versorgt, einmal ausgehend vom Betriebsbrems-Steuermodul 10 über eine erste Stromleitung 72 und einmal ausgehend vom Parkbrems-Steuermodul 18 über eine zweite Stromleitung 73. Das heißt, auch beim Ausfall der ersten Energiequelle 11a kann der Bremswertgeber 13 weiterhin betätigt werden und eine Bremsvorgabe VA bzw. das Signal S1 an dem Parkbrems-Steuermodul 18 bereitgestellt werden.

Das Parkbrems-Steuermodul 18 kann weiterhin über seine elektronische Steuereinheit (ECU) Signale über die Signalleitung 65 an das Anhängersteuermodul 15 bereitstellen, und das Anhängersteuermodul 15 kann einen Anhängerbremsdruck pA aussteuern. Dieser wird dann über die erste Redundanzdruckleitung 70 als erster Redundanzdruck pRa an dem ersten Redundanzdruckanschluss 12a bereitgestellt. Der erste Druckmodulator 9a ist dazu eingerichtet, abhängig vom Empfang des ersten Redundanzdrucks pRa am ersten Redundanzdruckanschluss 12a redundant und pneumatisch gesteuert, den ersten Betriebsbrems-Bremsdruck pBa an die Betriebsbremsen 3 auszusteuern. Das heißt, die Vorderachse 6a wird in diesem Redundanzfall in Übereinstimmung mit dem Anhänger 200, basierend auf dem Anhängerbremsdruck pA, gebremst.

Im Fehlerfall wird vorzugsweise von dem Betriebsbrems-Steuermodul 10 ein Diagnosesignal SD über den zweiten CAN-Bus 64 an dem Parkbrems-Steuermodul 18 bereitgestellt. Empfängt das Parkbrems-Steuermodul 18 dieses Diagnosesignal SD, wird von dem Parkbrems-Steuermodul 18 automatisch bei Empfang des Betriebsbrems-Betätigungssignal S1 ein Parkbremsdruck pPH für die Federspeicher 8 ausgesteuert, um die zweiten Betriebsbremsen 3 der Hinterachse 6b zu ersetzen, falls auch der zweite Betriebsbremskreis 2b ausgefallen ist.

Das heißt, in diesem Fehlerfall übernimmt das Parkbrems-Steuermodul 18 die Aufgabe des Betriebsbrems-Steuermoduls 10 und steuert einerseits über das Anhängersteuermodul 15 redundant mittels des ersten Redundanzdrucks pRa den ersten Druckmodulator 9a an und ersetzt die zweiten Betriebsbremsen 3 der Hinterachse 6b mittels der Federspeicher 8 des Parkbremskreises 7.

Wird in diesem Fehlerfall zu einer zusätzlichen (Hilfs-)Bremsung die Parkbrems-Betätigungsvorrichtung 19 betätigt, kann ebenso eine Bremsung erfolgen. In diesem Fall steuert das Parkbrems-Steuermodul 18 in Abhängigkeit des Empfangs des Parkbrems-Betätigungssignals S2 den Parkbremsdruck pPH für die Federspeicher 8 aus, um diese gestuft einzubremsen. Dieser Parkbremsdruck pPH wird auch über die Parkbremsdruck-Steuerleitung 66 an dem Anhängersteuermodul 15 bereitgestellt, invertiert und als Anhängerbremsdruck pA an dem Anhängerbremsdruckanschluss 16 ausgegeben. So wird der Anhänger 200 zusätzlich gebremst. Der gleiche Anhängerbremsdruck pA, der basierend auf dem gestuft ausgesteuerten Parkbremsdruck pPH ausgesteuert wird, wird über die erste Redundanzdruckleitung 70 wiederum an dem ersten Redundanzdruckanschluss 12a bereitgestellt. Somit wird auch die Vorderachse 6a für den Fall redundant eingebremst, dass zur zusätzlichen Bremsung die Parkbrems-Betätigungseinrichtung 19 betätigt wird.

Weiterhin existiert in diesem Fall eine zweite Redundanz für den Fall, dass die zweite Energiequelle 11b oder das Parkbrems-Steuermodul 18 oder das Anhängersteuermodul 15 ausfallen.

Zu diesem Zweck ist eine zweite Redundanzdruckleitung 74 vorgesehen. Die zweite Redundanzdruckleitung 74 zweigt von der Betriebsbrems-Bremsdruckleitung 75 ab und verläuft zu einem dritten Redundanzdruckanschluss 12c an dem Anhängersteuermodul 15. Über die zweite Redundanz-druckleitung 74 wird dem Anhängersteuermodul 15 der erste Betriebsbrems-Bremsdruck pBa als dritter Redundanzdruck pRc bereitgestellt. Das Anhängersteuermodul 15 ist dazu ausgebildet, in Abhängigkeit des Empfangs des dritten Redundanzdrucks pRc den Anhängerbremsdruck pA an dem Anhängerbremsdruckanschluss 16 auszusteuern. Hierzu kann das Anhängersteuermodul 15 ein herkömmliches Relaisventil 27 aufweisen, welches den dritten Redundanzdruck pRc luftmengenverstärkt an dem Anhängerbremsdruckanschluss 16 bereitstellt. Auch wenn in diesem Ausführungsbeispiel der erste Betriebsbremsdruck pBa an dem dritten Redundanzdruckanschluss 12c ausgesteuert wird, kann ebenso in einer Variante der zweite Betriebsbremsdruck pBb an dem Redundanzdruckanschluss 12c ausgesteuert werden. Dann ist eine entsprechende Druckleitung vorzusehen. Es kann auch vorgesehen sein, dass dem Anhängersteuermodul 15 über zwei verschiedene Redundanzdruckanschlüsse sowohl der erste als auch der zweite Betriebsbremsdruck pBa, pBb bereitgestellt werden.

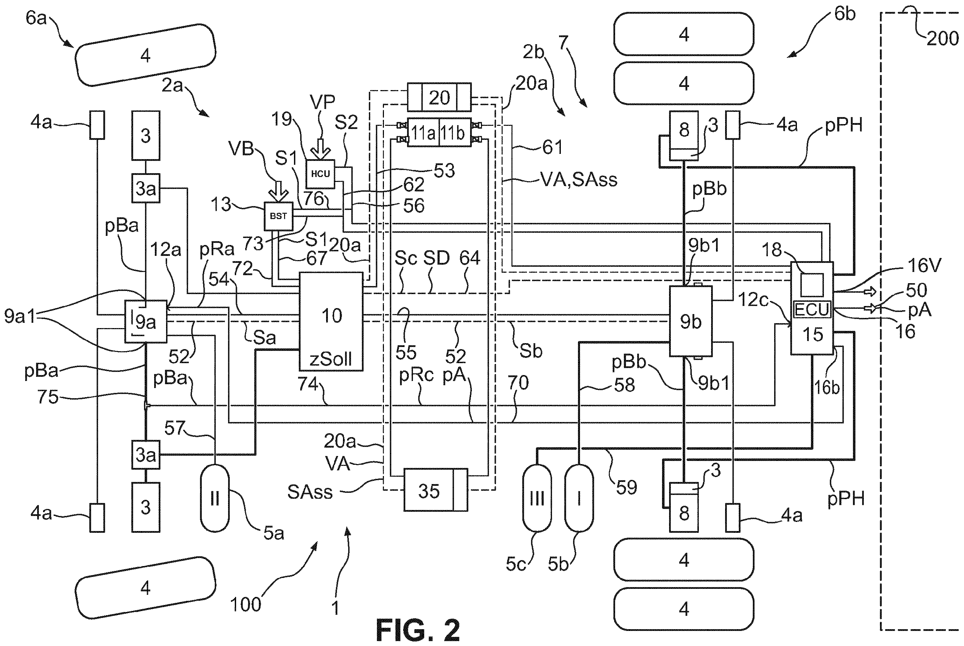

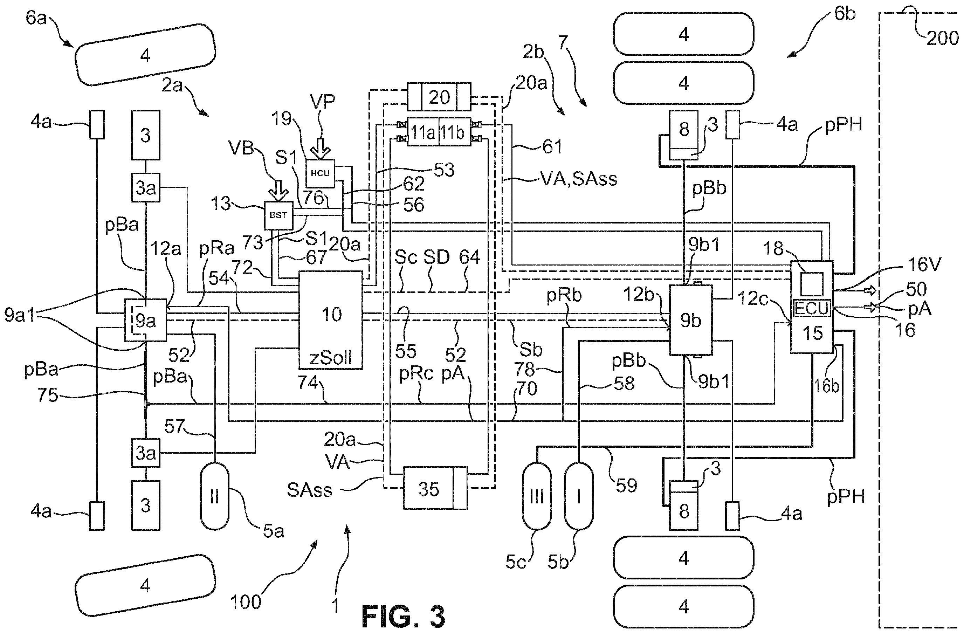

Die Ausführungsbeispiele der Fig. 2 und 3 unterscheiden sich von dem ersten Ausführungsbeispiel insbesondere darin, dass das Parkbrems-Steuermodul 18 in das Anhängersteuermodul 15 integriert ist. In diesem Fall weisen sie eine gemeinsame elektronische Steuereinheit (ECU) auf.

Im Folgenden werden für gleiche und ähnliche Elemente die gleichen Bezugszeichen verwendet, sodass bei der Beschreibung des zweiten und dritten Ausführungsbeispiels auf das erste Ausführungsbeispiel (Fig. 1) vollumfänglich Bezug genommen wird. Im Nachfolgenden wird insbesondere auf die Unterschiede zwischen dem ersten und dem zweiten bzw. dem zweiten und dem dritten Ausführungsbeispiel eingegangen.

Grundsätzlich ist die Funktionsweise im zweiten Ausführungsbeispiel ähnlich wie im ersten Ausführungsbeispiel. Das Anhängersteuermodul 15 ist hierbei direkt, und nicht über das Parkbrems-Steuermodul 18, mit dem elektrischen Bremswertgeber 13 über die Signalleitung 76 verbunden und auch über die Signalleitung 56 direkt mit der Parkbrems-Betätigungseinrichtung 19. Das Anhängersteuermodul 15 wird mittels der vierten Stromleitung 61 von der zweiten Energiequelle 11b gespeist. Über den zweiten CAN-Bus 64 ist das Anhängersteuermodul 15 mit dem Betriebsbrems-Steuermodul 10 verbunden und empfängt so das Anhängerbremsdruck-Signal Sc und auch das Diagnosesignal Sd im Falle eines Fehlers.

Ein wesentlicher Unterschied zum ersten Ausführungsbeispiel (Fig. 1) besteht darin, dass das Anhängersteuermodul 15 bzw. das Parkbrems-Steuermodul 18, das in dem Anhängersteuermodul 15 integriert ist, direkt den Parkbremsdruck pPH für die Federspeicher 8 aussteuert.

Der erste Redundanzfall, für den Fall, dass der erste und/oder zweite Betriebsbremskreis 2a, 2b ausfällt, ist bezüglich der Vorderachse 6a identisch zum ersten Ausführungsbeispiel; an dem Redundanz-Ausgang 16b wird der Anhängerbremsdruck pA ausgesteuert und über die erste Redundanzdruckleitung 70 dem ersten Redundanzdruckanschluss 12a des ersten Druckmodulators 9a bereitgestellt.

Bezüglich der Hinterachse 6b besteht jedoch ein Unterschied: Basierend auf dem Anhängerbremsdruck pA wird im Anhängersteuermodul 15 ein Steuerdruck an das Parkbrems-Steuermodul 18 gegeben, das in Abhängigkeit des vom Anhängersteuermodul 15 vorgegebenen Anhängerbremsdrucks pA den Parkbremsdruck pPH aussteuert. Alternativ kann auch vorgesehen sein, dass die gemeinsame Steuereinheit (ECU) vom Parkbrems-Steuermodul 18 und Anhängersteuermodul 15 elektrisch das Parkbrems-Steuermodul 18 schaltet, sodass der Parkbremsdruck pPH ausgesteuert wird. Auch in diesem Ausführungsbeispiel werden also die Betriebsbremsen 3 des zweiten Betriebsbremskreises 2b im Fehlerfall durch die Feststellbremsen 8 ersetzt.

Das dritte Ausführungsbeispiel basiert auf dem zweiten Ausführungsbeispiel, und insofern werden wiederum gleiche und ähnliche Elemente mit gleichen Bezugszeichen versehen.

Der Unterschied zwischen dem zweiten und dritten Ausführungsbeispiel besteht darin, dass eine dritte Redundanzdruckleitung 78 vorgesehen ist, die von der ersten Redundanzdruckleitung 70 abzweigt und zu einem zweiten Redundanzdruckanschluss 12b am zweiten Druckmodulator 9b führt. Der zweite Druckmodulator 9b weist also so wie der erste Druckmodulator 9a einen Redundanzdruckanschluss 12a, 12b auf. In diesem Ausführungsbeispiel werden also sowohl dem ersten Druckmodulator 9a als auch dem zweiten Druckmodulator 9b der Anhängerbremsdruck pA redundant als erster Redundanzdruck pBa bzw. zweiter Redundanzdruck pRb bereitgestellt. Der zweite Druckmodulator 9b ist dazu eingerichtet, in Abhängigkeit des Empfangs des zweiten Redundanzdrucks pRb einen entsprechenden Betriebsbrems-Bremsdruck pBb an den Betriebsbremsen 3 der Hinterachse 6b auszusteuern, um so die Hinterachse 6b zu bremsen. In diesem Ausführungsbeispiel ist es also im Fehlerfall des ersten und/oder zweiten Betriebsbremssystems nicht erforderlich, die Betriebsbremsen 3 der Hinterachse 6b durch die Betätigung der Federspeicher 8 zu ersetzen; vielmehr kann in diesem Ausführungsbeispiel der zweite Betriebsbrems-Bremsdruck pBb redundant in Abhängigkeit des Anhängerbremsdrucks pA ausgesteuert werden.

### Bezugszeichenliste (Bestandteil der Beschreibung)

- ECU: elektronische Steuereinheit
- pA: Anhängerbremsdruck
- pBa: erster Betriebsbrems-Bremsdruck
- pBp: zweiter Betriebsbrems-Bremsdruck
- pDa: erster Druckmodulator-Ausgangsdruck
- pDb: zweiter Druckmodulator-Ausgangsdruck
- pPH: Parkbrems-Bremsdruck
- pRa: erster Redundanzdruck
- pRb: zweiter Redundanzdruck
- pRc: dritter Redundanzdruck
- pSPH: Parkbrems-Steuerdruck
- S1: Betriebsbrems-Betätigungssignal
- S2: Parkbrems-Betätigungssignal
- Sa: erstes Betriebsbrems-Steuersignal
- SAss: Assistenz-Steuersignal
- Sb: zweites Betriebsbrems-Steuersignal
- Sc: Anhängerbremsdruck-Signal
- SD: Diagnosesignal
- VA: Assistenz-Bremsvorgabe
- VB: Betriebsbrems-Bremsvorgabe
- VP: Parkbrems-Bremsvorgabe
- X1: erste Redundanzventil-Schaltstellungen
- X2: zweite Redundanzventil-Schaltstellungen
- zSoll: Fahrzeug-Soll-Verzögerung
- 1: Bremssystem
- 2a: erster Betriebsbremskreis
- 2b: zweiter Betriebsbremskreis
- 3: Betriebsbremsen
- 3a: ABS-Steuerventile
- 4: Räder
- 4a: Daten von Raddrehzahlsensoren
- 5a: erster Druckmittelvorrat
- 5b: zweiter Druckmittelvorrat
- 5c: dritter Druckmittelvorrat
- 6a: Vorderachse
- 6b: Hinterachse
- 7: Parkbremskreis
- 8: Federspeicherbremsen / Feststellbremsen
- 9a: erster Druckmodulator
- 9a1: erster Druckmodulator-Ausgang
- 9b: zweiter Druckmodulator / Hinterachs-Druckmodulator
- 9b1: zweiter Druckmodulator-Ausgang
- 10: Betriebsbrems-Steuermodul
- 11a: erste Energiequelle
- 11b: zweite Energiequelle
- 12a: erster Redundanzdruckanschluss
- 12b: zweiter Redundanzdruckanschluss
- 12c: dritter Redundanzdruckanschluss
- 13: elektrischer Bremswertgeber
- 14a, 14b, 14c: Redundanzventil
- 15: Anhängersteuermodul
- 15a: roter Kupplungskopf
- 16: Anhängerbremsdruckanschluss
- 16b: Redundanz-Ausgang
- 16V: Vorratsdruck-Ausgang
- 18: Parkbrems-Steuermodul
- 19: Parkbrems-Betätigungseinrichtung
- 20: Fahrzeugbus
- 20a: Busleitung
- 26: inverses Relaisventil
- 27: Relaisventil
- 35: Assistenz-Steuermodul
- 50: Anhängerbremsdruck-Kupplungskopf
- 52: erster CAN-Bus
- 53: erste Stromleitung
- 54: zweite Stromleitung
- 55: dritte Stromleitung
- 56: (Parkbrems)-Signalleitung
- 57: erste Vorratsdruckzufuhrleitung
- 58: zweite Vorratsdruckzufuhrleitung
- 59: dritte Vorratsdruckzufuhrleitung
- 60: vierte Vorratsdruckzufuhrleitung
- 61: vierte Stromleitung
- 62: fünfte Stromleitung
- 63: Bremswertgeber-Signalleitung
- 64: zweiter CAN-Bus
- 65: Signalleitung
- 66: Parkbremsdruck-Steuerleitung
- 67: Bremswertsignalleitung
- 70: erste Redundanzdruckleitung
- 72: erste Stromleitung
- 73: zweite Stromleitung
- 74: zweite Redundanzdruckleitung
- 75: Betriebsbrems-Bremsdruckleitung
- 76: Signalleitung
- 78: Redundanzdruckleitung
- 100: Fahrzeug
- 200: Anhänger

## Patentansprüche

1. Elektronisch steuerbares Bremssystem (1), insbesondere elektronisch steuerbares pneumatisches Bremssystem (1), für ein Fahrzeug (100), insbesondere Nutzfahrzeug (100), mindestens aufweisend:
- ein Betriebsbrems-Steuermodul (10) zum Steuern mindestens eines ersten und eines zweiten Betriebsbremskreises (2a, 2b),
- den ersten Betriebsbremskreis (2a) mit ersten Betriebsbremsen (3), wobei den ersten Betriebsbremsen (3) ein erster Betriebsbrems-Bremsdruck (pBa) zuführbar ist und das Betriebsbrems-Steuermodul (10) ausgebildet ist, in Abhängigkeit einer Bremsvorgabe (VA, VB, VP) ein erstes Betriebsbrems-Steuersignal (Sa) zu erzeugen, wobei der erste Betriebsbrems-Bremsdruck (pBa) in Abhängigkeit des ersten Betriebsbrems-Steuersignals (Sa) erzeugt und an die ersten Betriebsbremsen (3) vorgegeben werden kann zum von dem Betriebsbrems-Steuermodul (10) elektrisch gesteuerten Umsetzen der Bremsvorgabe (VA, VB, VP) über den mindestens einen ersten Betriebsbremskreis (2a),
- den zweiten Betriebsbremskreis (2b) mit zweiten Betriebsbremsen (3), wobei den zweiten Betriebsbremsen (3) ein zweiter Betriebsbrems-Bremsdruck (pBb) zuführbar ist und das Betriebsbrems-Steuermodul (10) ausgebildet ist, in Abhängigkeit der Bremsvorgabe (VA, VB, VP) ein zweites Betriebsbrems-Steuersignal (Sb) zu erzeugen, wobei der zweite Betriebsbrems-Bremsdruck (pBb) in Abhängigkeit des zweiten Betriebsbrems-Steuersignals (Sb) erzeugt und an die zweiten Betriebsbremsen (3) vorgegeben werden kann zum von dem Betriebsbrems-Steuermodul (10) elektrisch gesteuerten Umsetzen der Bremsvorgabe (VA, VB, VP) über den mindestens einen zweiten Betriebsbremskreis (2a),
- einen Parkbremskreis (7) mit Feststellbremsen (8), wobei die Feststellbremsen (8) zum Parkbremsen und/oder Hilfsbremsen des Fahrzeugs (100) zuspannbar sind,
- ein Anhängersteuermodul (15) mit einem Anhängerbremsdruckanschluss (16) zur Verbindung mit einem Anhängerbremsdruck-Kupplungskopf (50) wobei das Anhängersteuermodul (15) ausgebildet ist, einen Anhängerbremsdruck (pA) zu erzeugen und über den Anhängerbremsdruckanschluss (16) auszugeben,
**dadurch gekennzeichnet, dass**
a) bei einer Funktionsstörung des ersten und/oder zweiten Betriebsbremskreis (2a, 2b):
- der erste Betriebsbrems-Bremsdruck (pBa) in Abhängigkeit des von dem Anhängersteuermodul (15) vorgegebenen Anhängerbremsdrucks (pA) an die ersten Betriebsbremsen (3) des mindestens einen ersten Betriebsbremskreises (2a) aussteuerbar ist; und/oder
- der zweite Betriebsbrems-Bremsdruck (pBb) in Abhängigkeit des von dem Anhängersteuermodul (15) vorgegebenen Anhängerbremsdrucks (pA) an die zweiten Betriebsbremsen (3) des mindestens einen zweiten Betriebsbremskreises (2b) und/oder die Feststellbremsen (8) zuspannbar sind;
und/oder
b) bei einer Funktionsstörung des Anhängersteuermoduls (15): der Anhängerbremsdruck (pA) in Abhängigkeit des ersten Betriebsbrems-Bremsdrucks (pBa) oder des zweiten Betriebsbrems-Bremsdrucks (pBb) an dem Anhängerbremsdruck-Kupplungskopf (50) aussteuerbar ist.

2. Elektronisch steuerbares Bremssystem (1) nach Anspruch 1, wobei die Feststellbremsen (8) als Federspeicherbremsen ausgebildet und den Federspeicherbremsen ein Parkbrems-Bremsdruck(pPH) zuführbar ist, und wobei bei einer Funktionsstörung des ersten und/oder zweiten Betriebsbremskreis (2a, 2b) der Parkbrems-Bremsdruck (pPH) direkt oder in Abhängigkeit des von dem Anhängersteuermodul (15) vorgegebenen Anhängerbremsdrucks (pA) aussteuerbar ist.

3. Elektronisch steuerbares Bremssystem (1) nach Anspruch 1 oder 2, wobei das Anhängersteuermodul (15) einen Redundanz-Ausgang (16b) aufweist, wobei das Anhängersteuermodul (15) ausgebildet ist, den Anhängerbremsdruck (pA) über den Redundanz-Ausgang (16b) auszugeben.

4. Elektronisch steuerbares Bremssystem (1) nach Anspruch 2 oder 3, wobei der Anhängerbremsdruck (pA) umgekehrt proportional zu dem Parkbrems-Bremsdruck (pPH) und/oder einem den Parkbrems-Bremsdruck (pPH) vorgebenden Parkbrems-Steuerdruck (pSPH) ist, der auszusteuern ist, um die Bremsvorgabe (VA, VB, VP) im Parkbremskreis (7) über die Federspeicherbremsen (8) umzusetzen.

5. Elektronisch steuerbares Bremssystem (1) nach einem der vorstehenden Ansprüche, wobei die Bremsvorgabe eine von einem Assistenz-Steuermodul (35) automatisiert vorgegebene Assistenz-Bremsvorgabe (VA) und/oder eine über eine Parkbrems-Betätigungsvorrichtung (19) manuell vorgegebene Parkbrems-Bremsvorgabe (VP) und/oder eine über einen elektronischen Bremswertgeber (13) manuell vorgegebene Betriebsbrems-Bremsvorgabe (VB) ist.

6. Elektronisch steuerbares Bremssystem (1) nach einem der vorstehenden Ansprüche, mit einem elektronischen Bremswertgeber (13), der zum Übertragen einer manuell vorgegebenen Betriebsbrems-Bremsvorgabe (VB) mit dem Betriebsbrems-Steuermodul (10) und dem Anhängersteuermodul (15) verbunden ist.

7. Elektronisch steuerbares Bremssystem (1) nach Anspruch 6, wobei das Anhängersteuermodul (15) dazu ausgebildet ist, die Betriebs-Bremsvorgabe (VB) umzusetzen und in Abhängigkeit der Betriebs-Bremsvorgabe den Anhängerbremsdruck (pA) auszusteuern.

8. Elektronisch steuerbares Bremssystem (1) nach einem der vorstehenden Ansprüche 2 bis 7, wobei im Parkbremskreis (7) ein Parkbrems-Steuermodul (18) angeordnet ist zum Ausgeben des Parkbrems-Bremsdruckes (pPH) in Abhängigkeit der dem Parkbremskreis (7) vorgegebenen Bremsvorgabe (VA, VB, VP).

9. Elektronisch steuerbares Bremssystem (1) nach Anspruch 8, wobei das Parkbrems-Steuermodul (18) mit den Federspeicherbremsen (8) des Parkbremskreises (7) verbunden ist zum pneumatischen Übertragen des Parkbrems-Bremsdruckes (pPH) an die Federspeicherbremsen (8) und/oder
- das Parkbrems-Steuermodul (18) mit dem Anhängersteuermodul (15) verbunden ist zum pneumatischen Übertragen des Parkbrems-Bremsdruckes (pPH) oder eines im Parkbrems-Steuermodul (18) erzeugten davon abhängigen Druckes an das Anhängersteuermodul (15).

10. Elektronisch steuerbares Bremssystem (1) nach Anspruch 8, wobei das Parkbrems-Steuermodul (18) im Anhängersteuermodul (15) integriert ist und die Bremsvorgabe (VA, VB, VP) elektrisch an das Anhängersteuermodul (15) übertragen werden kann, wobei das Anhängersteuermodul (15) ausgebildet ist,
- über das Parkbrems-Steuermodul (18) aus der Bremsvorgabe (VA, VB, VP) den Parkbrems-Bremsdruck (pPH) zu erzeugen und über einen Parkbrems-Ausgang (16a) an die Federspeicherbremsen (8) im Parkbremskreis (7) auszusteuern, und
wobei der über den Parkbrems-Ausgang (16a) ausgegebene Parkbrems-Bremsdruck (pPH) umgekehrt proportional zu dem über den Anhängerbremsdruckanschluss (16) und/oder den Redundanz-Ausgang (16b) ausgegebenen Anhängerbremsdruck (pA) ist.

11. Elektronisch steuerbares Bremssystem (1) nach einem der vorhergehenden Ansprüche 2 bis 10, wobei im Anhängersteuermodul (15) ein inverses Relaisventil (26) angeordnet ist zum Invertieren des dem Anhängersteuermodul (15) von einem Parkbrems-Steuermodul (18) pneumatisch übertragenen Parkbrems-Bremsdruckes (pPH) zum Erzeugen eines gegenüber dem Parkbrems-Bremsdruck (pPH) umgekehrt proportionalen Anhängerbremsdruck (pA).

12. Elektronisch steuerbares Bremssystem (1) nach einem der vorhergehenden Ansprüche, wobei in dem mindestens einen ersten Betriebsbremskreis (2a) ein erster Druckmodulator (9a) angeordnet ist, wobei der erste Druckmodulator (9a) einen ersten Druckmodulator-Ausgang (9a1) aufweist und der erste Druckmodulator (9a) ausgebildet ist, in Abhängigkeit des ersten Betriebsbrems-Steuersignals (Sa) einen ersten Druckmodulator-Ausgangsdruck (pDa) zu erzeugen und über den ersten Druckmodulator-Ausgang (9a1) auszugeben, wobei der erste Druckmodulator-Ausgangsdruck (pDa) als erster Betriebsbrems-Bremsdruck (pBa) an die ersten Betriebsbremsen (3) übertragbar ist; und
in dem mindestens einen zweiten Betriebsbremskreis (2b) ein zweiter Druckmodulator (9b) angeordnet ist, wobei der zweite Druckmodulator (9b) einen zweiten Druckmodulator-Ausgang (9b1) aufweist und der zweite Druckmodulator (9b) ausgebildet ist, in Abhängigkeit des zweiten Betriebsbrems-Steuersignals (Sb) einen zweiten Druckmodulator-Ausgangsdruck (pDb) zu erzeugen und über den zweiten Druckmodulator-Ausgang (9b1) auszugeben, wobei der zweite Druckmodulator-Ausgangsdruck (pDb) als zweiter Betriebsbrems-Bremsdruck (pBb) an die zweiten Betriebsbremsen (3) übertragbar ist.

13. Elektronisch steuerbares Bremssystem (1) nach Anspruch 12, wobei der erste Druckmodulator (9a) einen ersten Redundanzdruckanschluss (12a) aufweist und dem ersten Redundanzdruckanschluss (12a) der Anhängerbremsdruck (pA) als erster Redundanzdruck (pRa) vorgegeben werden kann.

14. Elektronisch steuerbares Bremssystem (1) nach Anspruch 13, wobei dem ersten Redundanzdruckanschluss (12a) ein Redundanzventilventil vorgeschaltet oder nachgeschaltet ist, wobei das Redundanzventil in zwei Redundanzventil-Schaltstellungen gebracht werden kann und das Redundanzventil
- in einer ersten Redundanzventil-Schaltstellung den im Anhängersteuermodul (15) erzeugten Anhängerbremsdruck (pA) als Redundanzdruck (pRa) aussperrt; und
- in einer zweiten Redundanzventil-Schaltstellung den im Anhängersteuermodul (15) erzeugten Anhängerbremsdruck (pA) als Redundanzdruck (pRa) an den erster Redundanzdruckanschluss (12a) freigeben kann zum redundanten Ansteuern des Druckmodulators (9a).

15. Elektronisch steuerbares Bremssystem (1) nach einem der Ansprüche 12 bis 14, wobei der zweite Druckmodulator (9b) einen zweiten Redundanzdruckanschluss (12b) aufweist und dem zweiten Redundanzdruckanschluss (12b) der Anhängerbremsdruck (pA) als Redundanzdruck (pRb) vorgegeben werden kann.

16. Elektronisch steuerbares Bremssystem (1) nach einem der Ansprüche 12 bis 15, wobei der Druckmodulator (9a, 9b) ausgebildet ist, falls eine Vorgabe des Betriebsbrems-Bremsdruckes (pBa, pBb) in Abhängigkeit eines Betriebsbrems-Steuersignals (Sa, Sb), das von dem Betriebsbrems-Steuermodul (10) bereitstellbar ist, verhindert ist, den Druckmodulator-Ausgangsdruck (pDa, pDb) in Abhängigkeit des dem Redundanzanschluss (12a, 12b) zugeführten Anhängerbremsdrucks (pA) zu erzeugen zum redundanten Vorgeben des Betriebsbrems-Bremsdruckes (pBa, pBb).

17. Elektronisch steuerbares Bremssystem (1) nach einem der vorhergehenden Ansprüche, wobei das Anhängersteuermodul (15) einen dritten Redundanzdruckanschluss (12c) aufweist, wobei der erste oder zweite Betriebsbrems-Bremsdruck (pBa, pBb) als dritter Redundanzdruck (pRc) an dem dritten Redundanzdruckanschluss (12c) aussteuerbar ist, wobei das Anhängersteuermodul (15) dazu ausgebildet ist in Abhängigkeit des dritten Redundanzdrucks (pRc) den Anhängerbremsdrucks (pA) an dem Anhängerbremsdruckanschluss (16) auszusteuern.

18. Elektronisch steuerbares Bremssystem (1) nach einem der vorhergehenden Ansprüche, wobei der mindestens eine erste und zweite Betriebsbremskreis (2a, 2b) von einer ersten Energiequelle (11a) und das Anhängersteuermodul (15) von einer zweiten Energiequelle (11b) mit Energie versorgt ist, wobei die erste Energiequelle (11a) unabhängig von der zweiten Energiequelle (11b) ist.

19. Fahrzeug (100), insbesondere Nutzfahrzeug (100), mit einem elektronisch steuerbaren Bremssystem (1) nach einem der vorhergehenden Ansprüche.

20. Verfahren zum Steuern eines elektronisch steuerbaren Bremssystems (1) nach einem der Ansprüche 1 bis 19, mit mindestens den folgenden Schritten:
- Feststellen, ob die Bremsvorgabe (VA, VB, VP) über den mindestens einen ersten Betriebsbremskreis (2a) und/oder den mindestens einen zweiten Betriebsbremskreis (2b) elektrisch gesteuert durch das Betriebsbrems-Steuermodul (10) umgesetzt werden kann;
- Erzeugen des Anhängerbremsdrucks (pA) in dem Anhängersteuermodul (15) in Abhängigkeit einer dem Anhängersteuermodul (15) vorgegebenen Bremsvorgabe (VA, VB, VP); und falls ein durch das Betriebsbrems-Steuermodul (10) elektrisch gesteuertes Umsetzen der Bremsvorgabe (VA, VB, VP) über den mindestens einen ersten Betriebsbremskreis (2a) und/oder den mindestens einen zweiten Betriebsbremskreis (2b) verhindert ist:
- Erzeugen des ersten Betriebsbrems-Bremsdrucks (pBa) in dem mindestens einen ersten Betriebsbremskreis (2a) in Abhängigkeit des in dem Anhängersteuermodul (15) erzeugten Anhängerbremsdrucks (pA); und/oder
- Erzeugen des zweiten Betriebsbrems-Bremsdrucks (pBb) in dem mindestens einen zweiten Betriebsbremskreis (2b) in Abhängigkeit des in dem Anhängersteuermodul (15) erzeugten Anhängerbremsdrucks (pA) und/oder Zuspannen der Feststellbremsen (8).

21. Verfahren nach Anspruch 20, wobei die Feststellbremsen (8) als Federspeicherbremsen ausgebildet und den Federspeicherbremsen ein Parkbrems-Bremsdruck (pPH) zuführbar, wobei das Zuspannen der Feststellbremsen (8) umfasst:
Erzeugen des Parkbrems-Bremsdrucks (pPH) in Abhängigkeit des in dem Anhängersteuermodul (15) erzeugten Anhängerbremsdrucks (pA).

22. Verfahren zum Steuern eines elektronischen Bremssystems (1) nach einem der Ansprüche 1 bis 19, mit mindestens den folgenden Schritten:
- Feststellen, ob die Bremsvorgabe (VA, VB, VP) durch das Anhängersteuermodul (15) umgesetzt werden kann; und falls ein durch das Anhängersteuermodul (15) elektrisch gesteuertes Umsetzen der Bremsvorgabe (VA, VB, VP) verhindert ist:
- Erzeugen des Anhängerbremsdrucks (pA) in Abhängigkeit des ersten oder zweiten Betriebsbrems-Bremsdrucks (pBa, pBb) an dem Anhängerbremsdruck-Kupplungskopf (50).

## Claims

1. A braking system (1) which can be controlled electronically, in particular a pneumatic braking system (1) which can be controlled electronically, for a vehicle (100), in particular a utility vehicle (100), which has at least:
- one service brake control module (10) for controlling at least one first and one second service brake circuit (2a, 2b),
- the first service brake circuit (2a) with first service brakes (3), wherein a first service-brake brake pressure (pBa) can be output to the first service brakes (3) and the service brake control module (10) is designed to produce a first service brake control signal (Sa) as a function of a braking instruction (VA, VB, VP), wherein the first service-brake brake pressure (pBa) can be produced as a function of the first service brake control signal (Sa) and predefined for the first service brakes (3) for electrically controlled conversion by the service brake control module (10) of the braking instruction (VA, VB, VP) via the at least one first service brake circuit (2a),
- the second service brake circuit (2b) with second service brakes (3), wherein a second service-brake brake pressure (pBb) can be output to the second service brakes (3) and the service brake control module (10) is designed to produce a second service brake control signal(Sb) as a function of the braking instruction (VA, VB, VP), wherein the second service-brake brake pressure (pBb) can be produced as a function of the second service brake control signal(Sb) and predefined for the second service brakes (3) for the conversion controlled electrically by the service brake control module (10) of the braking instruction (VA, VB, VP) via the at least one second service brake circuit (2a),
- a parking brake circuit (7) with parking brakes (8), wherein the parking brakes (8) can be applied to execute parking braking and/or emergency braking of the vehicle (100),
- a trailer control module (15) with a trailer brake pressure connection point (16) for linking with a trailer brake pressure coupling head (50), wherein the trailer control module (15) is designed to produce a trailer brake pressure (pA) and transmit it via the trailer brake pressure connection point (16),
**characterised in that**
a) in the event of malfunction of the first and/or second service brake circuit (2a, 2b):
- the first service-brake brake pressure (pBa) can be steered towards the first service brakes (3) of the at least one first service brake circuit (2a) as a function of the trailer brake pressure (pA) predefined by the trailer control module (15); and/or
- the second service-brake brake pressure (pBb) can be steered towards the second service brakes (3) of the at least one second service brake circuit (2b) as a function of the trailer brake pressure (pA) predefined by the trailer control module (15) and/or the parking brakes (8) can be applied;
and/or
b) in the event of malfunction of the trailer control module (15): the trailer brake pressure (pA) can be steered towards the trailer brake pressure coupling head (50) as a function of the first service-brake brake pressure (pBa) or of the second service-brake brake pressure (pBb).

2. The braking system (1) which can be controlled electronically according to claim 1, wherein the parking brakes (8) are designed as spring-loaded brakes and a parking-brake brake pressure (pPH) can be output to the spring-loaded brakes, and wherein, in the event of malfunction of the first and/or second service brake circuit (2a, 2b), the parking-brake brake pressure (pPH) can be steered directly or as a function of the trailer brake pressure (pA) predefined by the trailer control module (15).

3. The braking system (1) which can be controlled electronically according to claim 1 or 2, wherein the trailer control module (15) has a redundancy output (16b), wherein the trailer control module (15) is designed to transmit the trailer brake pressure (pA) via the redundancy output (16b).

4. The braking system (1) which can be controlled electronically according to claim 2 or 3, wherein the trailer brake pressure (pA) is inversely proportional to the parking-brake brake pressure (pPH) and/or to a parking brake control pressure (pSPH) predefined for the parking-brake brake pressure (pPH), which parking brake control pressure is to be steered so as to convert the braking instruction (VA, VB, VP) in the parking brake circuit (7) via the spring-loaded brakes (8).

5. The braking system (1) which can be controlled electronically according to any one of the preceding claims, wherein the braking instruction is an assistance braking instruction (VA) predefined automatedly by an assistance control module (35) and/or a parking brake braking instruction (VP) predefined manually via a parking brake actuating device (19) and/or a service brake braking instruction (VB) predefined manually via an electronic braking value transmitter (13).

6. The braking system (1) which can be controlled electronically according to any one of the preceding claims, with an electronic braking value transmitter (13) which is connected to the service brake control module (10) and to the trailer control module (15) for the transfer of a service brake braking instruction (VB) predefined manually.

7. The braking system (1) which can be controlled electronically according to claim 6, wherein the trailer control module (15) is designed to convert the service brake braking instruction (VB) and steer the trailer brake pressure (pA) as a function of the service brake braking instruction.

8. The braking system (1) which can be controlled electronically according to any one of the preceding claims 2 to 7, wherein a parking brake control module (18) is arranged in the parking brake circuit (7) for transmission of the parking-brake brake pressure (pPH) as a function of the braking instruction (VA, VB, VP) predefined for the parking brake circuit (7) .

9. The braking system (1) which can be controlled electronically according to claim 8, wherein the parking brake control module (18) is connected to the spring-loaded brakes (8) of the parking brake circuit (7) for pneumatic transfer of the parking-brake brake pressure (pPH) towards the spring-loaded brakes (8) and/or
- the parking brake control module (18) is connected to the trailer control module (15) for pneumatic transfer towards the trailer control module (15) of the parking-brake brake pressure (pPH) or pressure produced in the parking brake control module (18) and as a function of the latter.

10. The braking system (1) which can be controlled electronically according to claim 8, wherein the parking brake control module (18) is integrated into the trailer control module (15) and the braking instruction (VA, VB, VP) can be transferred electrically towards the trailer control module (15), wherein the trailer control module (15) is designed to
- produce the parking-brake brake pressure (pPH) from the braking instruction (VA, VB, VP) via the parking brake control module (18), and steer it towards the spring-loaded brakes (8) in the parking brake circuit (7) via a parking brake output (16a), and
wherein the parking-brake brake pressure (pPH) transmitted via the parking brake output (16a) is inversely proportional to the trailer brake pressure (pA) predefined via the trailer brake pressure connection point (16) and/or the redundancy output (16b).

11. The braking system (1) which can be controlled electronically according to any one of the preceding claims 2 to 10, wherein an inverted valve-relay (26) is arranged in the trailer control module (15) for inversion of the parking-brake brake pressure (pPH) pneumatically transferred towards the trailer control module (15) by a parking brake control module (18) to produce a trailer brake pressure (pA) inversely proportional to the parking-brake brake pressure (pPH).

12. The braking system (1) which can be controlled electronically according to any one of the preceding claims, wherein a first pressure modulator (9a) is arranged in the at least one first service brake circuit (2a), wherein the first pressure modulator (9a) has a first pressure modulator output (9a1) and the first pressure modulator (9a) is designed to produce a first pressure modulator output pressure (pDa) as a function of the first service brake control signal (Sa) and transmit it via the first pressure modulator output (9a1), wherein the first pressure modulator output pressure (pDa) can be transferred as first service-brake brake pressure (pBa) towards the first service brakes (3); and
in the at least one second service brake circuit (2b) a second pressure modulator (9b) is arranged, wherein the second pressure modulator (9b) has a second pressure modulator output (9b1) and the second pressure modulator (9b) is designed to produce a second pressure modulator output pressure (pDb) as a function of the second service brake control signal(Sb) and transmit it via the second pressure modulator output (9b1), wherein the second pressure modulator output pressure (pDb) can be transferred as second service-brake brake pressure (pBb) towards the second service brakes (3).

13. The braking system (1) which can be controlled electronically according to claim 12, wherein the first pressure modulator (9a) has a first redundancy pressure connection point (12a) and the trailer brake pressure (pA) can be predefined as redundancy pressure (pRa) for the first redundancy pressure connection point (12a).

14. The braking system (1) which can be controlled electronically according to claim 13, wherein a valve valve redundancy is mounted upstream or downstream of the first redundancy pressure connection point (12a), wherein the valve redundancy can be placed in two valve redundancy switching positions and the redundancy valve
- in a first valve redundancy switching position blocks the trailer brake pressure (pA) produced in the trailer control module (15) as redundancy pressure (pRa); and
- in a second valve redundancy switching position can release the trailer brake pressure (pA) produced in the trailer control module (15) as redundancy pressure (pRa) towards the first redundancy pressure connection point (12a) for the redundant steering of the pressure modulator (9a).

15. The braking system (1) which can be controlled electronically according to any one of claims 12 to 14, wherein the second pressure modulator (9b) has a second redundancy pressure connection point (12b) and the trailer brake pressure (pA) can be predefined as redundancy pressure (pRb) for the second redundancy pressure connection point (12b).

16. The braking system (1) which can be controlled electronically according to any one of claims 12 to 15, wherein the pressure modulator (9a, 9b) is designed, in the case where an instruction of the service-brake brake pressure (pBa, pBb) is prevented as a function of a service brake control signal (Sa, Sb) which can be provided by the service brake control module (10), to produce the pressure modulator output pressure (pDa, pDb) as a function of the trailer brake pressure (pA) output to the redundancy pressure connection point (12a, 12b) for the redundant predefinition of the service-brake brake pressure (pBa, pBb).

17. The braking system (1) which can be controlled electronically according to any one of the preceding claims, wherein the trailer control module (15) has a third redundancy pressure connection point (12c), wherein the first or second service-brake brake pressure (pBa, pBb) can be steered towards the third redundancy pressure connection point (12c) as third redundancy pressure (pRc), wherein the trailer control module (15) is designed to steer the trailer brake pressure (pA) towards the trailer brake pressure connection point (16) as a function of the third redundancy pressure (pRc).

18. The braking system (1) which can be controlled electronically according to any one of the preceding claims, wherein the at least one first and second service brake circuit (2a, 2b) is powered by a first power source (11a) and the trailer control module (15) is powered by a second power source (11b), wherein the first power source (11a) is independent of the second power source (11b).

19. A vehicle (100), in particular a utility vehicle (100), with a braking system (1) which can be controlled electronically according to any one of the preceding claims.

20. The control process of a braking system (1) which can be controlled electronically according to any one of claims 1 to 19, with at least the following steps which consist of:
- ascertaining whether the braking instruction (VA, VB, VP) can be converted by being controlled electrically by the service brake control module (10) via the at least one first service brake circuit (2a) and/or the at least one second service brake circuit (2b);
- producing the trailer brake pressure (pA) in the trailer control module (15) as a function of a braking instruction (VA, VB, VP) predefined for the trailer control module (15), and in the case where conversion of the braking instruction (VA, VB, VP) controlled electrically by the service brake control module (10) is prevented via the at least one first service brake circuit (2a) and/or the at least one second service brake circuit (2b):
- producing the first service-brake brake pressure (pBa) in the at least one first service brake circuit (2a) as a function of the trailer brake pressure (pA) produced in the trailer control module (15); and/or
- producing the second service-brake brake pressure (pBb) in the at least one second service brake circuit (2b) as a function of the trailer brake pressure (pA) produced in the trailer control module (15) and/or applying the parking brakes (8).

21. The process according to claim 20, wherein the parking brakes (8) are designed as spring-loaded brakes and a parking-brake brake pressure (pPH) can be output to the spring-loaded brakes, wherein the applying of the parking brakes (8) comprises the fact of:
producing the parking-brake brake pressure (pPH) as a function of the trailer brake pressure (pA) produced in the trailer control module (15).

22. The control process of an electronic braking system (1) according to any one of claims 1 to 19, with at least the following steps which consist of:
- ascertaining whether the braking instruction (VA, VB, VP) can be converted by the trailer control module (15), and in the case where conversion of the braking instruction (VA, VB, VP) controlled electrically by the trailer control module (15) is prevented:
- producing the trailer brake pressure (pA) as a function of the first or of the second service-brake brake pressure (pBa, pBb) towards the trailer brake pressure coupling head (50).

## Revendications

1. Système de freinage (1) qui peut être commandé électroniquement, en particulier système de freinage (1) pneumatique qui peut être commandé électroniquement, pour un véhicule (100), en particulier un véhicule utilitaire (100), qui présente au moins :
- un module de commande de frein de service (10) pour commander au moins un premier et un second circuit de freinage de service (2a, 2b),
- le premier circuit de freinage de service (2a) avec des premiers freins de service (3), dans lequel une première pression de freinage de frein de service (pBa) peut être amenée aux premiers freins de service (3) et le module de commande de frein de service (10) est conçu pour produire un premier signal de commande de frein de service (Sa) en fonction d'une consigne de freinage (VA, VB, VP), dans lequel la première pression de freinage de frein de service (pBa) peut être produite en fonction du premier signal de commande de frein de service (Sa) et prédéfinie à l'intention des premiers freins de service (3) pour la conversion commandée électriquement par le module de commande de frein de service (10) de la consigne de freinage (VA, VB, VP) via le au moins un premier circuit de freinage de service (2a),
- le second circuit de freinage de service (2b) avec des seconds freins de service (3), dans lequel une seconde pression de freinage de frein de service (pBb) peut être amenée aux seconds freins de service (3) et le module de commande de frein de service (10) est conçu pour produire un second signal de commande de frein de service (Sb) en fonction de la consigne de freinage (VA, VB, VP), dans lequel la seconde pression de freinage de frein de service (pBb) peut être produite en fonction du second signal de commande de frein de service (Sb) et prédéfinie à l'intention des seconds freins de service (3) pour la conversion commandée électriquement par le module de commande de frein de service (10) de la consigne de freinage (VA, VB, VP) via le au moins un second circuit de freinage de service (2a),
- un circuit de freinage de stationnement (7) avec des freins de stationnement (8), dans lequel les freins de stationnement (8) peuvent être serrés pour effectuer un freinage de stationnement et/ou un freinage de secours du véhicule (100),
- un module de commande de remorque (15) avec un raccord de pression de freinage de remorque (16) pour une liaison avec une tête d'accouplement de pression de freinage de remorque (50), dans lequel le module de commande de remorque (15) est conçu pour produire une pression de freinage de remorque (pA) et la transmettre via le raccord de pression de freinage de remorque (16),
**caractérisé en ce que**
a) lors d'un dysfonctionnement du premier et/ou second circuit de freinage de service (2a, 2b) :
- la première pression de freinage de frein de service (pBa) peut être pilotée vers les premiers freins de service (3) du au moins un premier circuit de freinage de service (2a) en fonction de la pression de freinage de remorque (pA) prédéfinie par le module de commande de remorque (15) ; et/ou
- la seconde pression de freinage de frein de service (pBb) peut être pilotée vers les seconds freins de service (3) du au moins un second circuit de freinage de service (2b) en fonction de la pression de freinage de remorque (pA) prédéfinie par le module de commande de remorque (15) et/ou les freins de stationnement (8) peuvent être serrés ;
et/ou
b) lors d'un dysfonctionnement du module de commande de remorque (15) : la pression de freinage de remorque (pA) peut être pilotée vers la tête d'accouplement de pression de freinage de remorque (50) en fonction de la première pression de freinage de frein de service (pBa) ou de la seconde pression de freinage de frein de service (pBb).

2. Système de freinage (1) qui peut être commandé électroniquement selon la revendication 1, dans lequel les freins de stationnement (8) sont conçus en tant que freins à accumulateur élastique et une pression de freinage de frein de stationnement (pPH) peut être amenée aux freins à accumulateur élastique, et dans lequel, lors d'un dysfonctionnement du premier et/ou second circuit de freinage de service (2a, 2b), la pression de freinage de frein de stationnement (pPH) peut être pilotée directement ou en fonction de la pression de freinage de remorque (pA) prédéfinie par le module de commande de remorque (15).

3. Système de freinage (1) qui peut être commandé électroniquement selon la revendication 1 ou 2, dans lequel le module de commande de remorque (15) présente une sortie de redondance (16b), dans lequel le module de commande de remorque (15) est conçu pour transmettre la pression de freinage de remorque (pA) via la sortie de redondance (16b).

4. Système de freinage (1) qui peut être commandé électroniquement selon la revendication 2 ou 3, dans lequel la pression de freinage de remorque (pA) est inversement proportionnelle à la pression de freinage de frein de stationnement (pPH) et/ou à une pression de commande de frein de stationnement (pSPH) prédéfinie à l'intention de la pression de freinage de frein de stationnement (pPH), laquelle pression de commande de frein de stationnement est à piloter de façon à convertir la consigne de freinage (VA, VB, VP) dans le circuit de freinage de stationnement (7) via les freins à accumulateur élastique (8).

5. Système de freinage (1) qui peut être commandé électroniquement selon l'une des revendications précédentes, dans lequel la consigne de freinage est une consigne de freinage d'assistance (VA) prédéfinie de façon automatisée par un module de commande d'assistance (35) et/ou une consigne de freinage de frein de stationnement (VP) prédéfinie manuellement via un dispositif d'actionnement de frein de stationnement (19) et/ou une consigne de freinage de frein de service (VB) prédéfinie manuellement via un transmetteur de valeur de freinage (13) électronique.

6. Système de freinage (1) qui peut être commandé électroniquement selon l'une des revendications précédentes, avec un transmetteur de valeur de freinage (13) électronique qui est relié au module de commande de frein de service (10) et au module de commande de remorque (15) pour le transfert d'une consigne de freinage de frein de service (VB) prédéfinie manuellement.

7. Système de freinage (1) qui peut être commandé électroniquement selon la revendication 6, dans lequel le module de commande de remorque (15) est conçu pour convertir la consigne de freinage de frein de service (VB) et piloter la pression de freinage de remorque (pA) en fonction de la consigne de freinage de frein de service.

8. Système de freinage (1) qui peut être commandé électroniquement selon l'une des revendications précédentes 2 à 7, dans lequel un module de commande de frein de stationnement (18) est agencé dans le circuit de freinage de stationnement (7) pour la transmission de la pression de freinage de frein de stationnement (pPH) en fonction de la consigne de freinage (VA, VB, VP) prédéfinie à l'intention du circuit de freinage de stationnement (7).

9. Système de freinage (1) qui peut être commandé électroniquement selon la revendication 8, dans lequel le module de commande de frein de stationnement (18) est relié aux freins à accumulateur élastique (8) du circuit de freinage de stationnement (7) pour le transfert pneumatique de la pression de freinage de frein de stationnement (pPH) vers les freins à accumulateur élastique (8) et/ou
- le module de commande de frein de stationnement (18) est relié au module de commande de remorque (15) pour le transfert pneumatique vers le module de commande de remorque (15) de la pression de freinage de frein de stationnement (pPH) ou d'une pression produite dans le module de commande de frein de stationnement (18) et en fonction de celui-ci.

10. Système de freinage (1) qui peut être commandé électroniquement selon la revendication 8, dans lequel le module de commande de frein de stationnement (18) est intégré au module de commande de remorque (15) et la consigne de freinage (VA, VB, VP) peut être transférée électriquement vers le module de commande de remorque (15), dans lequel le module de commande de remorque (15) est conçu pour
- produire la pression de freinage de frein de stationnement (pPH) à partir de la consigne de freinage (VA, VB, VP) via le module de commande de frein de stationnement (18), et la piloter vers les freins à accumulateur élastique (8) dans le circuit de freinage de stationnement (7) via une sortie de frein de stationnement (16a), et
dans lequel la pression de freinage de frein de stationnement (pPH) transmise via la sortie de frein de stationnement (16a) est inversement proportionnelle à la pression de freinage de remorque (pA) prédéfinie via le raccord de pression de freinage de remorque (16) et/ou la sortie de redondance (16b).

11. Système de freinage (1) qui peut être commandé électroniquement selon l'une des revendications précédentes 2 à 10, dans lequel une valve-relais (26) inversée est agencée dans le module de commande de remorque (15) pour l'inversion de la pression de freinage de frein de stationnement (pPH) pneumatiquement transférée vers le module de commande de remorque (15) par un module de commande de frein de stationnement (18) afin de produire une pression de freinage de remorque (pA) inversement proportionnelle à la pression de freinage de frein de stationnement (pPH).

12. Système de freinage (1) qui peut être commandé électroniquement selon l'une des revendications précédentes, dans lequel un premier modulateur de pression (9a) est agencé dans le au moins un premier circuit de freinage de service (2a), dans lequel le premier modulateur de pression (9a) présente une première sortie de modulateur de pression (9a1) et le premier modulateur de pression (9a) est conçu pour produire une première pression de sortie de modulateur de pression (pDa) en fonction du premier signal de commande de frein de service (Sa) et la transmettre via la première sortie de modulateur de pression (9a1), dans lequel la première pression de sortie de modulateur de pression (pDa) peut être transférée en tant que première pression de freinage de frein de service (pBa) vers les premiers freins de service (3) ; et
dans le au moins un second circuit de freinage de service (2b) est agencé un second modulateur de pression (9b), dans lequel le second modulateur de pression (9b) présente une seconde sortie de modulateur de pression (9b1) et le second modulateur de pression (9b) est conçu pour produire une seconde pression de sortie de modulateur de pression (pDb) en fonction du second signal de commande de frein de service (Sb) et la transmettre via la seconde sortie de modulateur de pression (9b1), dans lequel la seconde pression de sortie de modulateur de pression (pDb) peut être transférée en tant que seconde pression de freinage de frein de service (pBb) vers les seconds freins de service (3).

13. Système de freinage (1) qui peut être commandé électroniquement selon la revendication 12, dans lequel le premier modulateur de pression (9a) présente un premier raccord de pression de redondance (12a) et la pression de freinage de remorque (pA) peut être prédéfinie en tant que pression de redondance (pRa) à l'intention du premier raccord de pression de redondance (12a).

14. Système de freinage (1) qui peut être commandé électroniquement selon la revendication 13, dans lequel une valve valve de redondance est montée en amont ou en aval du premier raccord de pression de redondance (12a), dans lequel la valve de redondance peut être placée dans deux positions de commutation de valve de redondance et la valve de redondance
- dans une première position de commutation de valve de redondance, bloque la pression de freinage de remorque (pA) produite dans le module de commande de remorque (15) en tant que pression de redondance (pRa) ; et
- dans une seconde position de commutation de valve de redondance, peut libérer la pression de freinage de remorque (pA) produite dans le module de commande de remorque (15) en tant que pression de redondance (pRa) vers le premier raccord de pression de redondance (12a) pour le pilotage redondant du modulateur de pression (9a).

15. Système de freinage (1) qui peut être commandé électroniquement selon l'une des revendications 12 à 14, dans lequel le second modulateur de pression (9b) présente un deuxième raccord de pression de redondance (12b) et la pression de freinage de remorque (pA) peut être prédéfinie en tant que pression de redondance (pRb) à l'intention du deuxième raccord de pression de redondance (12b).

16. Système de freinage (1) qui peut être commandé électroniquement selon l'une des revendications 12 à 15, dans lequel le modulateur de pression (9a, 9b) est conçu, dans le cas où une consigne de la pression de freinage de frein de service (pBa, pBb) est empêchée en fonction d'un signal de commande de frein de service (Sa, Sb) qui peut être fourni par le module de commande de frein de service (10), afin de produire la pression de sortie de modulateur de pression (pDa, pDb) en fonction de la pression de freinage de remorque (pA) amenée au raccord de pression de redondance (12a, 12b) pour la prédéfinition redondante de la pression de freinage de frein de service (pBa, pBb).

17. Système de freinage (1) qui peut être commandé électroniquement selon l'une des revendications précédentes, dans lequel le module de commande de remorque (15) présente un troisième raccord de pression de redondance (12c), dans lequel la première ou seconde pression de freinage de frein de service (pBa, pBb) peut être pilotée vers le troisième raccord de pression de redondance (12c) en tant que troisième pression de redondance (pRc), dans lequel le module de commande de remorque (15) est conçu pour piloter la pression de freinage de remorque (pA) vers le raccord de pression de freinage de remorque (16) en fonction de la troisième pression de redondance (pRc).

18. Système de freinage (1) qui peut être commandé électroniquement selon l'une des revendications précédentes, dans lequel le au moins un premier et second circuit de freinage de service (2a, 2b) est alimenté en énergie par une première source d'énergie (11a) et le module de commande de remorque (15) est alimenté en énergie par une seconde source d'énergie (11b), dans lequel la première source d'énergie (11a) est indépendante de la seconde source d'énergie (11b).

19. Véhicule (100), en particulier véhicule utilitaire (100), avec un système de freinage (1) qui peut être commandé électroniquement selon l'une des revendications précédentes.

20. Procédé de commande d'un système de freinage (1) qui peut être commandé électroniquement selon l'une des revendications 1 à 19, avec au moins les étapes suivantes qui consistent à :
- constater si la consigne de freinage (VA, VB, VP) peut être convertie en étant commandée électriquement par le module de commande de frein de service (10) via le au moins un premier circuit de freinage de service (2a) et/ou le au moins un second circuit de freinage de service (2b) ;
- produire la pression de freinage de remorque (pA) dans le module de commande de remorque (15) en fonction d'une consigne de freinage (VA, VB, VP) prédéfinie à l'intention du module de commande de remorque (15) ; et dans le cas où une conversion de la consigne de freinage (VA, VB, VP) commandée électriquement par le module de commande de frein de service (10) est empêchée via le au moins un premier circuit de freinage de service (2a) et/ou le au moins un second circuit de freinage de service (2b) :
- produire la première pression de freinage de frein de service (pBa) dans le au moins un premier circuit de freinage de service (2a) en fonction de la pression de freinage de remorque (pA) produite dans le module de commande de remorque (15) ; et/ou
- produire la seconde pression de freinage de frein de service (pBb) dans le au moins un second circuit de freinage de service (2b) en fonction de la pression de freinage de remorque (pA) produite dans le module de commande de remorque (15) et/ou serrer les freins de stationnement (8).

21. Procédé selon la revendication 20, dans lequel les freins de stationnement (8) sont conçus en tant que freins à accumulateur élastique et une pression de freinage de frein de stationnement (pPH) peut être amenée aux freins à accumulateur élastique, dans lequel le serrage des freins de stationnement (8) comprend le fait de :
produire la pression de freinage de frein de stationnement (pPH) en fonction de la pression de freinage de remorque (pA) produite dans le module de commande de remorque (15).

22. Procédé de commande d'un système de freinage (1) électronique selon l'une des revendications 1 à 19, avec au moins les étapes suivantes qui consistent à :
- constater si la consigne de freinage (VA, VB, VP) peut être convertie par le module de commande de remorque (15) ; et dans le cas où une conversion de la consigne de freinage (VA, VB, VP) commandée électriquement par le module de commande de remorque (15) est empêchée :
- produire la pression de freinage de remorque (pA) en fonction de la première ou de la seconde pression de freinage de frein de service (pBa, pBb) vers la tête d'accouplement de pression de freinage de remorque (50).
